# EUROPEAN PATENT APPLICATION

(11) **EP 4 694 061 A1**
(43) Date of publication of application: **11.02.2026**
(21) Application number: 24783997.0
(22) Date of filing: 05.03.2024
(51) Int. Cl.: H04L 41/14

(54) **MODEL TRANSMISSION METHOD AND APPARATUS**

(30) Priority: 07.04.2023 CN 202310370084
(71) Applicant: Datang Mobile Communications Equipment Co., Ltd., Beijing 100085 (CN)
(72) Inventor: YAN, Nan, Beijing 100085 (CN); LIANG, Jing, Beijing 100085 (CN)
(74) Representative: Ipsilon
(86) International application number: PCT/CN2024/080042
(87) International publication number: WO 2024/207912

(57) **Abstract**

The embodiments of the present application belong to the technical field of communications. Provided are a model transmission method and apparatus. The method comprises: acquiring model-transmission-related information, which is used for indicating that there is an untransmitted portion of a first model, wherein a transmitted portion of the first model has been transmitted on an original access link; and executing, on a new access link, the transmission of the untransmitted portion of the first model or the transmission of a second model, wherein the new access link is a link between a terminal and a first node, the original access link is a link between the terminal and a second node, and the second model is a model required for the new access link.

## Description

### CROSS-REFERENCE TO RELATED APPLICATION

The present application claims priority to Chinese Patent Application No. 202310370084.7, filed on April 07, 2023, entitled "Model Transmission Method and Apparatus", which is hereby incorporated by reference in its entirety.

### FIELD

The present application relates to the field of communications, and in particular to a model transmission method and apparatus.

### BACKGROUND

A volume of an artificial intelligence (AI) model is much larger than a volume of various existing messages transmitted by radio resource control (RRC) signaling. Therefore, it may be divided into multiple segments and transmitted multiple times.

In the related art, after receiving all segments from an air interface, a user equipment (UE) (such as a terminal) or a network side performs a merging procedure to obtain complete message content. When a link is changed or a cell handover happens or a connection is recovered or reestablished, a receiving end may discard all segmented contents received in an original link/original cell and receive new message segments in a new link/new cell. For an AI model with a huge volume, it is more likely that the UE moves, but the AI model is not fully transmitted. If an entire AI model needs to be retransmitted every time a link is changed or a cell handover happens, it will cost huge air interface signaling overhead.

### SUMMARY

According to an embodiment of the present application, a model transmission method and a model transmission apparatus are provided, which, when an AI model is transmitted between a terminal and a network side, solves a problem of how to continue a transmission of an AI model after a link changes, thereby avoiding waste of air interface resources.

According to an embodiment of the present application, a model transmission method performed by a first node is provided. The method includes:
obtaining model transmission associated information, where the model transmission associated information is used to indicate that a first model has an untransmitted portion, and a transmitted portion of the first model has been transmitted in an original access link; and
transmitting the untransmitted portion of the first model in a new access link or transmitting a second model in a new access link;
where the new access link is a link between a terminal and the first node, the original access link is a link between the terminal and a second node, and the second model is a model required by the new access link.

According to the model transmission method of an embodiment of the present application, where the model transmission associated information includes one or more of the following:
a unique identifier of the first model;
a segment numbering of the transmitted portion;
a content identifier of the transmitted portion;
a number of bits of the transmitted portion;
a segment numbering of the untransmitted portion;
a content identifier of the untransmitted portion;
a number of bits of the untransmitted portion;
indication information, the indication information being used to indicate that there is a model that has not been transmitted completely; or
model indication information, the model indication information being used to indicate that the first model has the untransmitted portion.

According to the model transmission method of an embodiment of the present application, where transmitting the untransmitted portion of the first model in the new access link or transmitting the second model in the new access link includes:
determining, based on the model transmission associated information, that the model required by the new access link includes the first model, and determining to transmit the untransmitted portion of the first model in the new access link; or
determining, based on the model transmission associated information, that the model required by the new access link does not include the first model, and determining to transmit the second model in the new access link.

According to the model transmission method of an embodiment of the present application, where transmitting the untransmitted portion of the first model in the new access link or transmitting the second model in the new access link includes:
sending the untransmitted portion saved by the first node to the terminal; or
receiving the untransmitted portion sent from the second node, and sending the untransmitted portion to the terminal.

According to the model transmission method of an embodiment of the present application, where before receiving the untransmitted portion sent from the second node, the method further includes:
sending second request information to the second node, where the second request information is used to request the untransmitted portion.

According to the model transmission method of an embodiment of the present application, where the second request information includes one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

According to the model transmission method of an embodiment of the present application, where requesting the untransmitted portion from the second node includes:
requesting the second node to transmit the untransmitted portion through a data forwarding procedure.

According to the model transmission method of an embodiment of the present application, where receiving the untransmitted portion sent from the second node includes:
receiving the untransmitted portion sent from the second node through a data forwarding procedure.

According to the model transmission method of an embodiment of the present application, where transmitting the untransmitted portion of the first model in the new access link includes:
sending first request information to the terminal, where the first request information is used to request the untransmitted portion; and
receiving the untransmitted portion sent from the terminal.

According to the model transmission method of an embodiment of the present application, where the first request information includes one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

According to the model transmission method of an embodiment of the present application, where the method includes:
receiving the untransmitted portion sent from the second node.

According to the model transmission method of an embodiment of the present application, where the method further includes:
sending third request information to the second node, where the third request information is used to request the untransmitted portion; and
receiving the untransmitted portion sent from the second node.

According to the model transmission method of an embodiment of the present application, where the third request information includes one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

According to the model transmission method of an embodiment of the present application, where obtaining model transmission associated information further includes:
receiving the model transmission associated information sent from the terminal; or
receiving the model transmission associated information sent from the second node.

According to an embodiment of the present application, a model transmission method performed by a terminal is provided. The method includes:
transmitting an untransmitted portion of a first model in a new access link, or transmitting a second model in a new access link;
where a transmitted portion of the first model has been transmitted in an original access link, the new access link is a link between the terminal and a first node, the original access link is a link between the terminal and a second node, and the second model is a model required by the new access link.

According to the model transmission method of an embodiment of the present application, where the method further includes:
sending model transmission associated information to the first node, where the model transmission associated information is used to indicate that a first model has an untransmitted portion.

According to the model transmission method of an embodiment of the present application, where the model transmission associated information includes:
a unique identifier of the first model;
a segment numbering of the transmitted portion;
a content identifier of the transmitted portion;
a number of bits of the transmitted portion;
a segment numbering of the untransmitted portion;
a content identifier of the untransmitted portion;
a number of bits of the untransmitted portion;
indication information, the indication information being used to indicate that there is a model that has not been transmitted completely; or
model indication information, the model indication information being used to indicate that the first model has the untransmitted portion.

According to the model transmission method of an embodiment of the present application, where transmitting the untransmitted portion of the first model in the new access link includes:
receiving the untransmitted portion sent from the first node.

According to the model transmission method of an embodiment of the present application, where transmitting the untransmitted portion of the first model in the new access link includes:
receiving first request information sent from the first node, where the first request information is used to request the untransmitted portion; and
sending, based on the first request information, the untransmitted portion to the first node.

According to the model transmission method of an embodiment of the present application, where the first request information includes one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

According to an embodiment of the present application, a model transmission method performed by a second node is provided. The method includes:
sending model transmission associated information to a first node, where the model transmission associated information is used to indicate that a first model has an untransmitted portion, a transmitted portion of the first model has been transmitted in an original access link, the original access link is a link between a terminal and the second node, and the second node is a node that the terminal is connected to before being connected to the first node.

According to the model transmission method of an embodiment of the present application, where the model transmission associated information further includes:
a unique identifier of the first model;
a segment numbering of the transmitted portion;
a content identifier of the transmitted portion;
a number of bits of the transmitted portion;
a segment numbering of the untransmitted portion;
a content identifier of the untransmitted portion;
a number of bits of the untransmitted portion;
indication information, the indication information being used to indicate that there is a model that has not been transmitted completely; or
model indication information, the model indication information being used to indicate that the first model has the untransmitted portion.

According to the model transmission method of an embodiment of the present application, where the method further includes:
sending the untransmitted portion of the first model to the first node.

According to the model transmission method of an embodiment of the present application, where before sending the untransmitted portion of the first model to the first node, the method further includes:
receiving second request information sent from the first node, where the second request information is used to request the untransmitted portion.

According to the model transmission method of an embodiment of the present application, where the second request information includes one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

According to an embodiment of the present application, a first node is provided. The first node includes: a memory, a transceiver, and a processor;
where the memory is used for storing a computer program; the transceiver is used for receiving and transmitting data under control of the processor; and the processor is used for reading the computer program in the memory and implementing the steps of the model transmission method described above.

According to an embodiment of the present application, a terminal is provided. The terminal includes: a memory, a transceiver, and a processor;
where the memory is used for storing a computer program; the transceiver is used for receiving and transmitting data under control of the processor; and the processor is used for reading the computer program in the memory and implementing the steps of the model transmission method described above.

According to an embodiment of the present application, a second node is provided. The second node includes: a memory, a transceiver, and a processor;
where the memory is used for storing a computer program; the transceiver is used for receiving and transmitting data under control of the processor; and the processor is used for reading the computer program in the memory and implementing the steps of the model transmission method described above.

According to an embodiment of the present application, a model transmission apparatus is provided. The model transmission apparatus includes:
an obtaining module, configured to obtain model transmission associated information, where the model transmission associated information is used to indicate that a first model has an untransmitted portion, and a transmitted portion of the first model has been transmitted in an original access link;
a first transmitting module, configured to transmit an untransmitted portion of a first model in a new access link, or transmit a second model in a new access link;
where the new access link is a link between a terminal and the first node, the original access link is a link between the terminal and a second node, and the second model is a model required by the new access link.

According to an embodiment of the present application, a model transmission apparatus is provided. The model transmission apparatus includes:
a second transmitting module, configured to transmit an untransmitted portion of a first model in a new access link, or transmit a second model in a new access link;
where a transmitted portion of the first model has been transmitted in an original access link, the new access link is a link between the terminal and a first node, the original access link is a link between the terminal and a second node, and the second model is a model required by the new access link.

According to an embodiment of the present application, a model transmission apparatus is provided. The model transmission apparatus includes:
a first sending module, configured to send model transmission associated information to a first node, where the model transmission associated information is used to indicate that a first model has an untransmitted portion, a transmitted portion of the first model has been transmitted in an original access link, the original access link is a link between a terminal and the second node, and the second node is a node that the terminal is connected to before being connected to the first node.

According to an embodiment of the present application, a processor-readable storage medium is provided, where the processor-readable storage medium stores computer programs that cause a processor to perform the model transmission method described in the first aspect.

According to an embodiment of the present application, a processor-readable storage medium is provided, where the processor-readable storage medium stores computer programs that cause a processor to perform the model transmission method described in the second aspect.

According to an embodiment of the present application, a processor-readable storage medium is provided, where the processor-readable storage medium stores computer programs that cause a processor to perform the model transmission method described in the third aspect.

According to an embodiment of the present application, a model transmission method and a model transmission apparatus are provided. In case that a transmission link is changed, a transmission status of a model may be determined according to an identifier. In case that a same model is used before and after the link is changed, by obtaining model content of the transmission model that has been transmitted or untransmitted, the remaining model content is transmitted in a new link to continue the model content that has been transmitted before the link is changed, to form an entire model content for the same AI model in the new link. In case that different models are used before and after the link is changed, the model required for the new link is directly transmitted in the new link to avoid waste of air interface resources.

### BRIEF DESCRIPTION OF THE DRAWINGS

In order to clearly illustrate the solutions according to the embodiments of the present application, the accompanying drawings used in the description of the embodiments are briefly introduced below. It should be noted that the drawings in the following description are only some embodiments of the present application. For those skilled in the art, other drawings may be obtained according to these drawings without creative efforts.
FIG. 1 is a first schematic flowchart of a model transmission method according to an embodiment of the present application;
FIG. 2 is a second schematic flowchart of a model transmission method according to an embodiment of the present application;
FIG. 3 is a third schematic flowchart of a model transmission method according to an embodiment of the present application;
FIG. 4 is a first schematic flowchart of transmitting an AI model from a network to a UE according to an embodiment of the present application;
FIG. 5 is a second schematic flowchart of transmitting an AI model from a network to a UE according to an embodiment of the present application;
FIG. 6 is a third schematic flowchart of transmitting an AI model from a network to a UE according to an embodiment of the present application;
FIG. 7 is a fourth schematic flowchart of transmitting an AI model from a network to a UE according to an embodiment of the present application;
FIG. 8 is a schematic flowchart of transmitting an AI model from a UE to a network according to an embodiment of the present application;
FIG. 9 is a fifth schematic flowchart of transmitting an AI model from a network to a UE according to an embodiment of the present application;
FIG. 10 is a schematic structural diagram of a first node according to an embodiment of the present application;
FIG. 11 is a schematic structural diagram of a terminal according to an embodiment of the present application;
FIG. 12 is a schematic structural diagram of a second node according to an embodiment of the present application;
FIG. 13 is a first schematic structural diagram of a model transmission apparatus according to an embodiment of the present application;
FIG. 14 is a second schematic structural diagram of a model transmission apparatus according to an embodiment of the present application; and
FIG. 15 is a third schematic structural diagram of a model transmission apparatus according to an embodiment of the present application.

### DETAILED DESCRIPTION

The term "and/or" in the embodiments of the present application describes three situations of the related objects. For example, A and/or B may represent three situations: only A, A and B together, and only B. The character "/" generally represents that the two objects on two sides have a relationship of "or".

The terms "multiple" in the embodiments of the present application refer to two or more, and other quantifiers are similar.

The solutions according to the present application are clearly and completely described below in combination with the accompanying drawings in the embodiments of the present application. It should be noted that the described embodiments are some embodiments of the present application, rather than all the embodiments. Based on the embodiments of the present application, all other embodiments obtained by those skilled in the art without creative effort are within the scope of protection of the present application.

According to an embodiment of the present application, a model transmission method and a model transmission apparatus are provided, which solves a problem of how to continue a transmission of an AI model after a link is changed, thereby avoiding waste of air interface resources.

It should be noted that the method and the apparatus according to the embodiments of the present application are based on the same conception. Since the principles of the method and the apparatus to solve the problems are similar, the implementation of the apparatus and method may be similar to each other, and the same part will not be repeated.

The technical solutions provided by the embodiments of the present application may be applied to a variety of systems, especially 5G systems. For example, an applicable system may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G new radio (NR) system, and the like. Each of these various systems includes a terminal device and a network device. The system may also include a core network, such as an Evolved Packet System (EPS), a 5G System (5GS), and the like.

First, the following are introduced.

### Functional division of Artificial Intelligence (AI)/Machine Learning (ML) models

With development of AI and ML, AI/ML models (hereinafter referred to as AI models) are being used to improve communication system performance. It is expected that support for AI model-based working methods will be studied in Rel-18 NR. After a large amount of training data is collected, an AI model is trained on training nodes (model training), and the training nodes send the AI model to nodes that actually uses the AI model (model inference) for application. The AI model may be updated (model update) over time (periodically) or triggered by monitoring results (model monitoring).

### Air interface signaling transmission

In a communication system, an air interface in the related art may use segmented downlink radio resource control (RRC) signaling including RRCReconfiguration and RRCResume. A current air interface may use a segmented uplink RRC signaling including UECapabilityInformation and MeasurementReportAppLayer.

The RRC signaling of an air interface in the related art may support a maximum of 5 downlink segments or a maximum of 16 uplink segments. A maximum amount of data that may be carried by a single segment is 9 Kbytes. Therefore, for a current air interface control plane, a maximum size of downlink transmission signaling is 45 Kb, and a maximum size of uplink transmission signaling is 144 Kb.

### AI model transmission (model transfer/delivery)

For an AI model, if a model training procedure on a network side is adopted, the network side may send the trained AI model to a user equipment (UE) through a downlink signaling; if a model training procedure on a UE side is adopted, the UE side may send the trained AI model to the network side through an uplink signaling; based on a size of signaling that may be carried by the air interface in the related art, especially for the downlink signaling, it is expected that a data volume of the AI model may exceed an upper limit of a data volume of signaling that may be carried by the air interface. Therefore, the number of segments may need to be increased.

RRC signaling segments cannot be sent in parallel when transmitted over the air interface and they are usually sent in order of segment numberings. If the number of segments is large, the time to send all the segments will be longer, and the possibility of handover, reestablishment or link recovery during the sequential transmission process will also increase.

According to an embodiment of the present application, a model transmission method and a model transmission apparatus are provided, which solves a problem of how to continue a transmission of an AI model after a link is changed, thereby avoiding waste of air interface resources.

The following describes a model transmission method provided by embodiments of the present application.

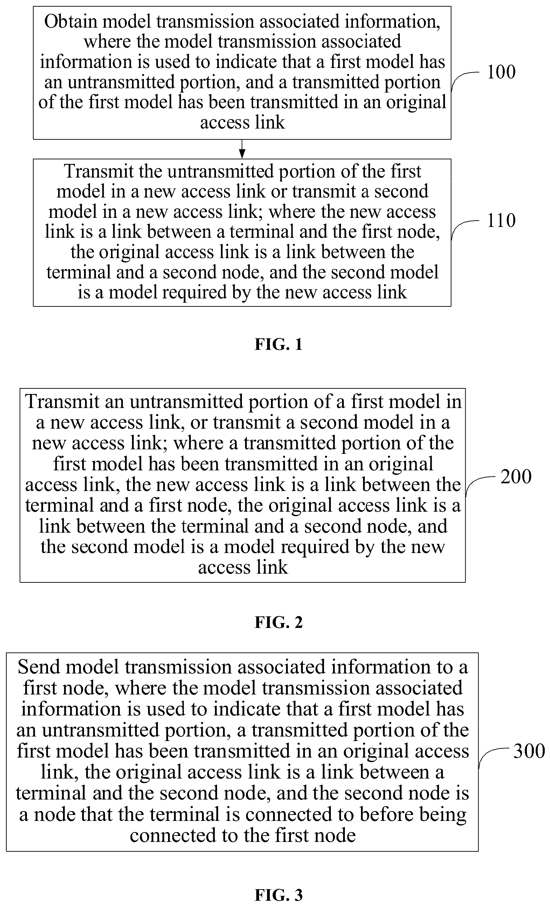

FIG. 1 is a first schematic flowchart of a model transmission method according to an embodiment of the present application. As shown in FIG. 1, according to an embodiment of the present application, a model transmission method is provided. An execution body of the model transmission method may be a network side, such as a first node. The method includes:
step 100, obtaining model transmission associated information, where the model transmission associated information is used to indicate that a first model has an untransmitted portion, and a transmitted portion of the first model has been transmitted in an original access link.

In an embodiment, the first node may be a network-side node to which a new access link belongs, such as any node of a core network. The core network may be, for example, a base station, a location management function (LMF) or an access and mobility management function (AMF).

In an embodiment, the first model may be a model required by the original access link, such as an AI model.

In an embodiment, the transmitted portion of the first model may be a portion of the first model that has been transmitted completely through the original access link in case that the transmission link is changed during the model transmission. The transmitted portion may be, for example, a transmitted segment, a transmitted function or a number of transmitted bits.

In an embodiment, the untransmitted portion of the first model may be a portion of the first model that has not been transmitted completely through the original access link in case that the transmission link is changed during the model transmission. The untransmitted portion may be, for example, an untransmitted segment, an untransmitted function or a number of untransmitted bits.

In an embodiment, the model transmission associated information may be used to indicate that a model has not been fully transmitted through indication information, for example 1-bit indication information.

In an embodiment, the model transmission associated information may be used to indicate that a model includes the untransmitted portion through indication information, for example 1-bit indication information.

In an embodiment, the model transmission associated information may be used to indicate that a certain model has not been fully transmitted through model indication information. For example, the model transmission associated information is used to indicate an identifier of the first model, which indicates that the first model has an untransmitted portion.

In an embodiment, the model transmission associated information may be used to indicate the untransmitted portion and/or the transmitted portion of the first model, indicating which portion of the first model has not been transmitted (untransmitted portion) and/or which portion has been transmitted (transmitted portion).

Step 110, transmitting the untransmitted portion of the first model in a new access link or transmitting a second model in a new access link;
where the new access link is a link between a terminal and the first node, the original access link is a link between the terminal and a second node, and the second model is a model required by the new access link.

In an embodiment, the model required by the new access link and the model required by the original access link may be the same model or different models. In case that they are the same model, the first model is the second model.

In an embodiment, the second node may be a network side node to which the transmission link belongs in case that or before the transmission link is changed during the model transmission, that is, the second node may be a network side node to which the original access link belongs. The network side node may be, for example any node in a core network, such as a base station, LMF or AMF.

In an embodiment, the first node and the second node may be the same node. For example, in case that the terminal changes cells in the same base station, the node does not change. At this time, the changed cell may obtain the transmitted portion or untransmitted portion of the terminal in the unchanged cell, and continue the transmission.

In an embodiment, in order to continue to transmit the model in case that the transmission link is changed during the model transmission, before continuing to transmit the model, the first node may first obtain the transmitted portion of the model that has been transmitted, and then finish transmitting the untransmitted portion in the new access link. The new access link is the changed link.

In an embodiment, in order to continue to transmit the model in case that the transmission link is changed during the model transmission, before continuing to transmit the model, the first node may first obtain the untransmitted portion of the model that has not been transmitted, and then finish transmitting the untransmitted portion in the new access link. The new access link is the changed link.

According to an embodiment of the present application, a model transmission method is provided. In case that a transmission link is changed, a transmission status of a model may be determined according to an identifier. In case that a same model is used before and after the link is changed, by obtaining model content of the transmission model that has been transmitted or untransmitted, the model content that has been transmitted before the link is changed is received, and remaining model content is transmitted in a new link to form an entire model content for the same AI model in the new link. In case that different models are used before and after the link is changed, the model required for the new link is directly transmitted in the new link to avoid waste of air interface resources.

**In** an embodiment, where the model transmission associated information includes one or more of the following:
a unique identifier of the first model;
a segment numbering of the transmitted portion;
a content identifier of the transmitted portion;
a number of bits of the transmitted portion;
a segment numbering of the untransmitted portion;
a content identifier of the untransmitted portion;
a number of bits of the untransmitted portion;
indication information, the indication information being used to indicate that there is a model that has not been transmitted completely; or
model indication information, the model indication information being used to indicate that the first model has the untransmitted portion.

In an embodiment, the unique identifier of the first model may be an identifier for identifying the first model such as a model identifier (ID) or a model functionality.

In an embodiment, the segment numbering of the transmitted portion may be the numbering of all segments that have been transmitted in case that the transmission link is changed, in case that the model adopts segment transmission.

In an embodiment, the content identifier of the transmitted portion may be the identifier of all functional items that have been transmitted in case that the transmission link is changed, in case that the model adopts functional item transmission.

In an embodiment, the number of bits of the transmitted portion may be the number of bits that have been transmitted in case that the transmission link is changed during the model transmission, in case that the model adopts a string format.

In an embodiment, the segment numbering of the transmitted portion may be the numbering of all segments that have been transmitted in case that the transmission link is changed, in case that the model adopts segment transmission.

In an embodiment, the content identifier of the untransmitted portion may be the identifiers of all functional items that have not been transmitted in case that the transmission link is changed, in case that the model adopts functional item transmission.

In an embodiment, the number of bits of the untransmitted portion may be the number of bits that have not been transmitted in case that the transmission link is changed during the model transmission process, in case that the model adopts a string format.

For example, in case that the model adopts segment transmission, if the segments that have been transmitted completely are segment A, segment B, and segment C in case that the transmission link is changed, and the segments that have not been transmitted completely are segment D, segment E, and segment F, then the segment numberings of the transmitted portion are numbered as segment A, segment B, and segment C, and the segment numberings of the untransmitted portion are numbered as segment D, segment E, and segment F.

For example, in case that the model adopts functional item transmission, if the functional items that have been transmitted completely are functional item A, functional item B, and functional item C in case that the transmission link is changed, and the functional items that have not been transmitted completely are functional item D, functional item E, and functional item F, then the content identifiers of the transmitted portion are segment A, segment B, and segment C, and the content identifiers of the untransmitted portion are segment D, segment E, and segment F.

For example, in case that the model adopts a string format, if the number of bits that have been transmitted is 10 bytes, and the number of bits that have not been transmitted is 20 bytes in case that the transmission link is changed during the model transmission, the number of bits of the transmitted portion is 10 bytes, and the number of bits of the untransmitted portion is 20 bytes.

In an embodiment, the indication information may be 1-bit indication information. In case that the bit value of the indication information is 0, it may indicate that there is no model that has not been transmitted completely; in case that the bit value of the indication information is 1, it may indicate that there is a model that has not been transmitted completely.

In an embodiment, the indication information may be 1-bit indication information. In case that the bit value of the indication information is 1, it may indicate that there is no model that has not been transmitted completely; in case that the bit value of the indication information is 0, it may indicate that there is a model that has not been transmitted completely.

In an embodiment, the first node may obtain one or more of the unique identifier of the first model, the segment numbers of the transmitted portion, the content identifier of the transmitted portion, the number of bits of the transmitted portion, the segment numbers of the untransmitted portion, the content identifier of the untransmitted portion, the number of bits of the untransmitted portion, the indication information, or the model indication information, determine the untransmitted portion in the first model that has not been transmitted completely, and then finish transmitting the untransmitted portion in the new access link or transmitting the second model in the new access link.

In an embodiment, transmitting the untransmitted portion of the first model in the new access link or transmitting the second model in the new access link includes:
determining, based on the model transmission associated information, that the model required by the new access link includes the first model, and determining to transmit the untransmitted portion of the first model in the new access link; or
determining, based on the model transmission associated information, that the model required by the new access link does not include the first model, and determining to transmit the second model in the new access link.

In an embodiment, after the first node obtains the model transmission associated information, it may determine whether the model required by the new access link is consistent with the model required by the original access link. For example, the first node may determine, based on the unique identifier of the first model in the model transmission associated information, whether the model required by the new access link is consistent with the model required by the original access link.

In an embodiment, after the first node obtains model transmission associated information, if the first node does not save the first model corresponding to the unique identifier of the first model, it may be determined that the model required by the new access link is not inconsistent with the model required by the original access link.

In an embodiment, after the first node obtains model transmission associated information, if the first node has saved the first model corresponding to the unique identifier of the first model, but a first model is different from the first model used by the terminal at the second node, it may be determined that the model required by the new access link is not inconsistent with the model required by the original access link.

For example, in case that the terminal uses the first model at the second node, the first node updates the first model and uses the updated first model for model inference. After the link is changed, the first node determines that the first model used previously is inconsistent with the first model of the first node.

In an embodiment, in case that it is determined that the models to be transmitted before and after the link change are consistent, the first node may obtain the untransmitted portion of the first model that has not been transmitted, and then transmit the untransmitted portion of the first model in the new access link.

In an embodiment, in case that it is determined that the models to be transmitted before and after the link change are not consistent, the first node may transmit the second model in the new access link.

In an embodiment, transmitting the untransmitted portion of the first model in the new access link includes:
sending the untransmitted portion saved by the first node to the terminal; and
receiving the untransmitted portion sent from the second node, and sending the untransmitted portion to the terminal.

In an embodiment, after the transmission link is changed, the first node may determine whether the model required by the new access link is the same as the model transmitted by the original access link. If it is the same model, the first node may determine that the segmentation method of the model saved by the first node is consistent with the segmentation method of the model transmitted by the original access link.

In an embodiment, the segmentation method may be: a segmented transmission intercepted according to the RRC signaling format after intercepting at a suitable place (such as at an end of an entire field), a segmented transmission intercepted according to the subdivided functional items in the AI model, a segmented transmission intercepted according to the string size (such as the number of bits), or other possible segmentation methods, which are not limited in the application.

In an embodiment, if the model saved by the first node is consistent with the first model and the segmentation method is also consistent, the first node may directly send the untransmitted portion to the terminal in the new access link based on the untransmitted portion after obtaining the model transmission associated information.

After the transmission link is changed, if the model required by the new access link is model A, the model transmitted by the original access link is also model A, and the segmentation method of the A model saved by the first node is segmentation transmission according to the subdivided functional items in the model, and the segmentation method of the model transmitted by the original access link is also segmentation transmission according to the subdivided functional items in the model, then the first node may directly send the untransmitted portion to the terminal in the new access link based on the untransmitted portion.

In an embodiment, if the model saved by the first node is consistent with the first model but the segmentation methods are not consistent, the second node is required to provide the untransmitted untransmitted portion, and the first node forwards the untransmitted portion to the terminal in the new access link after it receives the untransmitted portion.

After the transmission link is changed, if the model required by the new access link is model A, the model transmitted by the original access link is also model A, and the segmentation method of the A model saved by the first node is segmentation transmission according to the subdivided functional items in the model, and the segmentation method of the model transmitted by the original access link is segmentation interception and transmission according to the size of the string, the first node may request the untransmitted portion from the second node, and send the untransmitted portion to the terminal in the new access link after receiving the untransmitted portion.

In an embodiment, where before receiving the untransmitted portion sent from the second node, the model transmission method further includes:
sending second request information to the second node, where the second request information is used to request the untransmitted portion.

In an embodiment, if the model saved by the first node is consistent with the first model but the segmentation methods are not consistent, after obtaining the model transmission associated information, the first node may send second request information to the second node based on the untransmitted portion, requesting the second node to send the untransmitted portion to the first node.

In an embodiment, after receiving the second request information sent from the first node, the second node may send the untransmitted portion of the first model to the first node.

In an embodiment, after receiving the untransmitted portion of the first model sent from the second node, the first node may send the untransmitted portion of the first model to the terminal.

In an embodiment, the second request information includes one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

In an embodiment, the first node may send model transmission associated information to the second node to indicate the untransmitted portion of the first model. After receiving the model transmission associated information, the second node may send the untransmitted portion of the first model to the first node based on the indication.

In an embodiment, the first node may send second node one or more of the unique identifier of the first model, the segment numbers of the transmitted portion, the content identifier of the transmitted portion, the number of bits of the transmitted portion, the segment numbers of the untransmitted portion, the content identifier of the untransmitted portion, the number of bits of the untransmitted portion, the indication information, or the model indication information. The second node itself may confirm the untransmitted portion of the first model that has not been transmitted based on the transmitted information, and then transmit the untransmitted portion of the first model to the first node.

In an embodiment, requesting the untransmitted portion from the second node includes:
requesting the second node to transmit the untransmitted portion through a data forwarding procedure.

In an embodiment, in case that it is determined that the models to be transmitted before and after the link change are consistent, in order to obtain the untransmitted portion of the first model, the first node may request the second node to transmit the untransmitted portion of the first model through a data forwarding procedure.

In an embodiment, after receiving the request, the second node may send the untransmitted portion of the first model to the first node through a data forwarding procedure.

In an embodiment, receiving the untransmitted portion sent from the second node includes:
receiving the untransmitted portion sent from the second node through a data forwarding procedure.

In an embodiment, the first node may receive the untransmitted portion of the first model sent from the second node through a data forwarding procedure, and then send the untransmitted portion to the terminal.

In an embodiment, the terminal may receive the untransmitted portion of the first model sent from the first node, and then combine it with the model content of the transmitted portion received at the second node to obtain the entire first model.

In an embodiment, transmitting the untransmitted portion of the first model in the new access link includes:
sending first request information to the terminal, where the first request information is used to request the untransmitted portion; and
receiving the untransmitted portion sent from the terminal.

In an embodiment, in case that the model is being transmitted uplink, the terminal may transmit the first model to the second node. In case that the link is changed, the terminal needs to send the untransmitted portion of the first model to the first node to which the new link belongs, that is, the untransmitted portion.

In an embodiment, in order to obtain the untransmitted portion of the first model, the first node may first obtain the transmitted portion of the first model from the second node, and then send first request information to the terminal to request the terminal to send the untransmitted portion of the first model.

In an embodiment, the terminal may receive the first request information sent from the first node, and then send the untransmitted portion of the first model to the first node.

In an embodiment, the first node may receive the untransmitted portion of the first model sent from terminal, and then combine it with the model content of the transmitted portion received at the second node to obtain the entire first model.

In an embodiment, the first request information includes one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

In an embodiment, the first node may send model transmission associated information to the terminal to indicate the untransmitted portion of the first model. After receiving the model transmission associated information, the terminal may send the untransmitted portion of the first model to the first node based on the indication.

In an embodiment, the first node may send terminal one or more of the unique identifier of the first model, the segment numbers of the transmitted portion, the content identifier of the transmitted portion, the number of bits of the transmitted portion, the segment numbers of the untransmitted portion, the content identifier of the untransmitted portion, the number of bits of the untransmitted portion, the indication information, or the model indication information, which is used to help terminal confirm the first model . The terminal itself may confirm the untransmitted portion of the first model that has not been transmitted, and then transmit the untransmitted portion of the first model to the first node.

In an embodiment, the model transmission method further includes:
receiving the untransmitted portion sent from the second node.

In an embodiment, during the uplink transmission of the model, if the transmission link is changed, the first node may receive the transmitted portion of the first model sent from the second node, where the transmitted portion has been transmitted completely at the second node.

In an embodiment, during the uplink transmission of the model, if the transmission link is changed, the second node may actively send the transmitted portion of the first model to the first node to which the new link belongs.

In an embodiment, after receiving the transmitted portion of the first model, the first node may continue to receive the untransmitted portion of the first model transmitted by the terminal, and then combine the transmitted portion and the untransmitted portion of the first model into the entire model content for model application in the new access link.

In an embodiment, the model transmission method further includes:
sending third request information to the second node, where the third request information is used to request the untransmitted portion; and
receiving the untransmitted portion sent from the second node.

In an embodiment, during the uplink transmission of the model, if the transmission link is changed, the first node may send third request information to the second node, to request the second node to send the transmitted portion of the first model, where the transmitted portion has been transmitted at the second node.

In an embodiment, the second node may receive the third request information sent from the first node, and then send the transmitted portion of the first model to the first node.

In an embodiment, the first node may receive the transmitted portion of the first model sent from the second node, and then continue to receive the untransmitted portion of the first model transmitted by the terminal. After the reception is completed, the transmitted portion and the untransmitted portion of the first model may be combined into the entire model content for model application in the new access link.

In an embodiment, the third request information includes one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

In an embodiment, the first node may send model transmission associated information to the second node to indicate the transmitted portion of the first model. After receiving the model transmission associated information, the second node may send the transmitted portion of the first model to the first node based on the indication.

In an embodiment, the first node may send the second node one or more of the unique identifier of the first model, the segment numbers of the transmitted portion, the content identifier of the transmitted portion, the number of bits of the transmitted portion, the segment numbers of the untransmitted portion, the content identifier of the untransmitted portion, the number of bits of the untransmitted portion, the indication information, or the model indication information, which is used to help terminal confirm the first model . The second node itself may confirm the transmitted portion of the first model that has been transmitted, and then transmit the transmitted portion of the first model to the first node.

In an embodiment, the obtaining model transmission associated information further includes:
receiving the model transmission associated information sent from the terminal; or
receiving the model transmission associated information sent from the second node.

In an embodiment, the first node may receive model transmission associated information sent from the terminal, determine the transmitted portion and/or untransmitted portion of the first model based on the model transmission associated information, and then transmit the untransmitted portion of the first model in the new access link or transmit the second model in the new access link.

In an embodiment, the first node may receive model transmission associated information sent from the second node, determine the transmitted portion and/or untransmitted portion of the first model based on the model transmission associated information, and then transmit the untransmitted portion of the first model in the new access link or transmit the second model in the new access link.

FIG. 2 is a second schematic flowchart of a model transmission method according to an embodiment of the present application. As shown in FIG. 2, according to an embodiment of the present application, a model transmission method is provided. An execution body of the model transmission method may be a terminal, such as a mobile phone. The method includes:
step 200, transmitting an untransmitted portion of a first model in a new access link, or transmitting a second model in a new access link;
where a transmitted portion of the first model has been transmitted in an original access link, the new access link is a link between the terminal and a first node, the original access link is a link between the terminal and a second node, and the second model is a model required by the new access link.

In an embodiment, in case that the models to be transmitted are consistent before and after the transmission link is changed, the terminal may transmit the untransmitted portion of the first model in the new access link.

In an embodiment, in case of uplink transmission of the model, the terminal may send the untransmitted portion of the first model to the first node.

In an embodiment, in case of downlink transmission of the model, the terminal may receive the untransmitted portion of the first model sent from the first node.

In an embodiment, in case that the models to be transmitted before and after the transmission link is changed are inconsistent, the terminal may transmit the second model in the new access link.

In an embodiment, in case of uplink transmission of the model, the terminal may send the second model to the first node.

In an embodiment, in case of downlink transmission of the model, the terminal may receive the second model sent from the first node.

According to an embodiment of the present application, a model transmission method is provided. In case that a transmission link is changed, a transmission status of a model may be determined according to an identifier. In case that a same model is used before and after the link is changed, the model content that has been transmitted before the link is changed is received, and remaining model content is transmitted in a new link to form an entire model content for the same AI model in the new link. In case that different models are used before and after the link is changed, the model required for the new link is directly transmitted in the new link to avoid waste of air interface resources.

In an embodiment, the model transmission method further includes:
sending model transmission associated information to the first node, where the model transmission associated information is used to indicate that a first model has an untransmitted portion.

In an embodiment, in case that the transmission link is changed and the first model is not fully transmitted, the terminal may send model transmission associated information to the first node to help the first node determine the transmitted portion that has been transmitted completely or the untransmitted portion that has not been transmitted completely.

In an embodiment, the first node may receive the model transmission associated information sent from the terminal, determine the transmitted portion of the first model that has been transmitted completely or the untransmitted portion that has not been transmitted completely based on the model transmission associated information, and then the first node may send the untransmitted portion of the first model to the terminal.

In an embodiment, the first node may receive the model transmission associated information sent from the terminal, determine, based on the model transmission associated information, that the first model is not the model required by the new link, and then the first node may send the second model required by the new link to the terminal.

In an embodiment, the model transmission associated information further includes:
a unique identifier of the first model;
a segment numbering of the transmitted portion;
a content identifier of the transmitted portion;
a number of bits of the transmitted portion;
a segment numbering of the untransmitted portion;
a content identifier of the untransmitted portion;
a number of bits of the untransmitted portion;
indication information, the indication information being used to indicate that there is a model that has not been transmitted completely; or
model indication information, the model indication information being used to indicate that the first model has the untransmitted portion.

In an embodiment, the unique identifier of the first model may be an identifier for identifying the first model such as a model ID or a model functionality.

The segment numberings of the transmitted portion may be the numberings of all segments that have been transmitted in case that the transmission link is changed, in case that the model adopts segment transmission.

In an embodiment, the content identifiers of the transmitted portion may be the identifiers of all functional items that have been transmitted in case that the transmission link is changed, in case that the model adopts functional item transmission.

In an embodiment, the number of bits of the transmitted portion may be the number of bits that has been transmitted in case that the transmission link is changed during the model transmission process, in case that the model adopts a string format.

The segment numberings of the untransmitted portion may be the numberings of all segments that have not been transmitted in case that the transmission link is changed, in case that the model adopts segment transmission.

In an embodiment, the segment numberings of the untransmitted portion may be the numberings of all segments that have not been transmitted in case that the transmission link is changed, in case that the model adopts segment transmission.

In an embodiment, the number of bits of the untransmitted portion may be the number of bits that have not been transmitted in case that the transmission link is changed during the model transmission process, in case that the model adopts a string format.

For example, in case that the model adopts segment transmission, if the segments that have been transmitted completely are segment A, segment B, and segment C in case that the transmission link is changed, and the segments that have not been transmitted completely are segment D, segment E, and segment F, then the segment numberings of the transmitted portion are numbered as segment A, segment B, and segment C, and the segment numberings of the untransmitted portion are numbered as segment D, segment E, and segment F.

For example, in case that the model adopts functional item transmission, if the functional items that have been transmitted completely are functional item A, functional item B, and functional item C in case that the transmission link is changed, and the functional items that have not been transmitted completely are functional item D, functional item E, and functional item F, then the content identifiers of the transmitted portion are segment A, segment B, and segment C, and the content identifiers of the untransmitted portion are segment D, segment E, and segment F.

For example, in case that the model adopts a string format, if the number of bits that have been transmitted is 10 bytes, and the number of bits that have not been transmitted is 20 bytes in case that the transmission link is changed during the model transmission process, the number of bits of the transmitted portion is 10 bytes, and the number of bits of the untransmitted portion is 20 bytes.

In an embodiment, the terminal may send the first node one or more of the unique identifier of the first model, the segment numbers of the transmitted portion, the content identifier of the transmitted portion, the number of bits of the transmitted portion, the segment numbers of the untransmitted portion, the content identifier of the untransmitted portion, the number of bits of the untransmitted portion, the indication information, or the model indication information, which is used to help the first node determine the untransmitted portion of the first model that has not been transmitted.

In an embodiment, the first node may obtain, from the terminal, one or more of the unique identifier of the first model, the segment numbers of the transmitted portion, the content identifier of the transmitted portion, the number of bits of the transmitted portion, the segment numbers of the untransmitted portion, the content identifier of the untransmitted portion, the number of bits of the untransmitted portion, the indication information, or the model indication information, determine the untransmitted portion in the first model that has not been transmitted completely, and then finish transmitting the untransmitted portion in the new access link or transmitting the second model in the new access link.

In an embodiment, transmitting the untransmitted portion of the first model in the new access link includes:
receiving the untransmitted portion sent from the first node.

In an embodiment, after the transmission link is changed, in order to continue the transmission of the first model, the terminal may receive the untransmitted portion of the first model sent from the first node, and then combine the transmitted portion of the first model and the untransmitted portion of the first model received before the transmission link is changed, to form the entire first model for model application of the new link.

In an embodiment, the first node may send the untransmitted portion of the first model to the terminal.

In an embodiment, if the model saved by the first node is consistent with the first model and the segmentation method is also consistent, the first node may directly send the untransmitted portion to the terminal in the new access link based on the untransmitted portion after obtaining the model transmission associated information.

In an embodiment, if the model saved by the first node is consistent with the first model but the segmentation methods are not consistent, the second node is required to provide the untransmitted portion, and the first node forwards the untransmitted portion to the terminal in the new access link after it receives the untransmitted portion.

In an embodiment, transmitting the untransmitted portion of the first model in the new access link includes:
receiving first request information sent from the first node, where the first request information is used to request the untransmitted portion; and
sending, based on the first request information, the untransmitted portion to the first node.

In an embodiment, in case of uplink transmission of the model, the terminal may transmit the first model to the second node. In case that the link is changed, the terminal needs to send a portion of the first model that has not transmitted completely to the first node which the new link belongs to, that is, the untransmitted portion.

In an embodiment, in order to obtain the untransmitted portion of the first model, the first node may first obtain the transmitted portion of the first model from the second node, and then send first request information to the terminal to request the terminal to send the untransmitted portion of the first model.

In an embodiment, the terminal may receive the first request information sent from the first node, and then send the untransmitted portion of the first model to the first node.

In an embodiment, the first node may receive the untransmitted portion of the first model sent from terminal, and then combine it with the model content of the transmitted portion received at the second node to obtain the entire first model.

In an embodiment, the first request information includes one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

In an embodiment, the terminal may receive model transmission associated information from the first node to indicate the untransmitted portion of the first model. After receiving the model transmission associated information, the terminal may send the untransmitted portion of the first model to the first node based on the indication.

In an embodiment, the terminal may receive one or more of the unique identifier of the first model, the segment numbers of the transmitted portion, the content identifier of the transmitted portion, the number of bits of the transmitted portion, the segment numbers of the untransmitted portion, the content identifier of the untransmitted portion, the number of bits of the untransmitted portion, the indication information, or the model indication information sent from the first node, which is used to help terminal confirm the first model. The terminal itself may confirm the untransmitted portion of the first model that has not been transmitted, and then transmit the untransmitted portion of the first model to the first node.

FIG. 3 is a third schematic flowchart of a model transmission method according to an embodiment of the present application. As shown in FIG. 3, according to an embodiment of the present application, a model transmission method is provided. An execution body of the model transmission method may be a network side, such as a second node. The method includes:
step 300, sending model transmission associated information to a first node, where the model transmission associated information is used to indicate a transmitted portion of a first model, a transmitted portion of the first model has been transmitted in an original access link, the original access link is a link between a terminal and the second node, and the second node is a node that the terminal is connected to before being connected to the first node.

In an embodiment, in case that the transmission link is changed and the first model is not fully transmitted, the second node may send model transmission associated information to the first node to help the first node determine the transmitted portion of the first model that has been transmitted completely or the untransmitted portion of the first model that has not been transmitted completely.

In an embodiment, the first node may receive the model transmission associated information sent from the second node, determine the transmitted portion of the first model that has been transmitted completely or the untransmitted portion that has not been transmitted completely based on the model transmission associated information, and then the first node may send the untransmitted portion of the first model to the terminal.

In an embodiment, the first node may receive the model transmission associated information sent from the second node, determine, based on the model transmission associated information, that the first model is not the model required by the new link, and then the first node may send the second model required by the new link to the terminal.

According to an embodiment of the present application, a model transmission method is provided. In case that a transmission link is changed, the model transmission associated information is sent to a node to which the new link belongs, to help the new node determine the transmission status of the model. In case that a same model is used before and after the link is changed, the model content that has been transmitted before the link is changed is received, and remaining model content is transmitted in a new link to form an entire model content for the same model in the new link. In case that different models are used before and after the link is changed, the model required for the new link is directly transmitted in the new link to avoid waste of air interface resources.

In an embodiment, the model transmission associated information further includes:
a unique identifier of the first model;
a segment numbering of the transmitted portion;
a content identifier of the transmitted portion;
a number of bits of the transmitted portion;
a segment numbering of the untransmitted portion;
a content identifier of the untransmitted portion;
a number of bits of the untransmitted portion;
indication information, the indication information being used to indicate that there is a model that has not been transmitted completely; or
model indication information, the model indication information being used to indicate that the first model has the untransmitted portion.

In an embodiment, the unique identifier of the first model may be an identifier for identifying the first model such as a model ID or a model functionality.

The segment numberings of the transmitted portion may be the numberings of all segments that have been transmitted in case that the transmission link is changed, in case that the model adopts segment transmission.

In an embodiment, the content identifiers of the transmitted portion may be the identifiers of all functional items that have been transmitted in case that the transmission link is changed, in case that the model adopts functional item transmission.

In an embodiment, the number of bits of the transmitted portion may be the number of bits that has been transmitted in case that the transmission link is changed during the model transmission process, in case that the model adopts a string format.

The segment numberings of the untransmitted portion may be the numberings of all segments that have not been transmitted in case that the transmission link is changed, in case that the model adopts segment transmission.

In an embodiment, the segment numberings of the untransmitted portion may be the numberings of all segments that have not been transmitted in case that the transmission link is changed, in case that the model adopts segment transmission.

In an embodiment, the number of bits of the untransmitted portion may be the number of bits that have not been transmitted in case that the transmission link is changed during the model transmission process, in case that the model adopts a string format.

For example, in case that the model adopts segment transmission, if the segments that have been transmitted completely are segment A, segment B, and segment C in case that the transmission link is changed, and the segments that have not been transmitted completely are segment D, segment E, and segment F, then the segment numberings of the transmitted portion are numbered as segment A, segment B, and segment C, and the segment numberings of the untransmitted portion are numbered as segment D, segment E, and segment F.

For example, in case that the model adopts functional item transmission, if the functional items that have been transmitted completely are functional item A, functional item B, and functional item C in case that the transmission link is changed, and the functional items that have not been transmitted completely are functional item D, functional item E, and functional item F, then the content identifiers of the transmitted portion are segment A, segment B, and segment C, and the content identifiers of the untransmitted portion are segment D, segment E, and segment F.

For example, in case that the model adopts a string format, if the number of bits that have been transmitted is 10 bytes, and the number of bits that have not been transmitted is 20 bytes in case that the transmission link is changed during the model transmission process, the number of bits of the transmitted portion is 10 bytes, and the number of bits of the untransmitted portion is 20 bytes.

In an embodiment, the second node may send the first node one or more of the unique identifier of the first model, the segment numbers of the transmitted portion, the content identifier of the transmitted portion, the number of bits of the transmitted portion, the segment numbers of the untransmitted portion, the content identifier of the untransmitted portion, the number of bits of the untransmitted portion, the indication information, or the model indication information, which is used to help the first node determine the untransmitted portion of the first model that has not been transmitted.

In an embodiment, the first node may obtain, from the second node, one or more of the unique identifier of the first model, the segment numbers of the transmitted portion, the content identifier of the transmitted portion, the number of bits of the transmitted portion, the segment numbers of the untransmitted portion, the content identifier of the untransmitted portion, the number of bits of the untransmitted portion, the indication information, or the model indication information, determine the untransmitted portion in the first model that has not been transmitted completely, and then finish transmitting the untransmitted portion in the new access link or transmitting the second model in the new access link.

In an embodiment, the model transmission method further includes:
sending the untransmitted portion of the first model to the first node.

In an embodiment, during the transmission of the model, if the transmission link is changed, the second node may actively send the transmitted portion of the first model to the first node to which the new link belongs.

In an embodiment, after receiving the untransmitted portion of the first model sent from the second node, the first node may send the untransmitted portion of the first model to the terminal.

In an embodiment, before sending the untransmitted portion of the first model to the first node, the model transmission method further includes:
receiving second request information sent from the first node, where the second request information is used to request the untransmitted portion.

In an embodiment, if the model saved by the first node is consistent with the first model but the segmentation methods are not consistent, after obtaining the model transmission associated information, the first node may send second request information to the second node based on the untransmitted portion, requesting the second node to send the untransmitted portion to the first node.

In an embodiment, after receiving the second request information sent from the first node, the second node may send the untransmitted portion of the first model to the first node.

In an embodiment, after receiving the untransmitted portion of the first model sent from the second node, the first node may send the untransmitted portion of the first model to the terminal.

In an embodiment, the second request information includes one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

In an embodiment, the second node may receive model transmission associated information sent from the first node to indicate the untransmitted portion of the first model. After receiving the model transmission associated information, the second node may send the untransmitted portion of the first model to the first node based on the indication.

In an embodiment, the second node may receive, from the first node, one or more of the unique identifier of the first model, the segment numbers of the transmitted portion, the content identifier of the transmitted portion, the number of bits of the transmitted portion, the segment numbers of the untransmitted portion, the content identifier of the untransmitted portion, the number of bits of the untransmitted portion, the indication information, or the model indication information. The second node itself may confirm the untransmitted portion of the first model that has not been transmitted based on the transmitted information, and then transmit the untransmitted portion of the first model to the first node.

In an embodiment, the model transmission method further includes:
sending the transmitted portion to the first node.

In an embodiment, during the uplink transmission of the model, if the transmission link is changed, the second node may actively send the transmitted portion of the first model to the first node to which the new link belongs.

In an embodiment, after the first node receives the transmitted portion of the first model, it may continue to receive the untransmitted portion of the first model transmitted by the terminal, and then combine the transmitted portion and the untransmitted portion of the first model into a complete model content for model application in the new access link.

In an embodiment, the model transmission method further includes:
receiving third request information sent from the first node, where the third request information is used to request the untransmitted portion; and
sending, based on the third request information, the transmitted portion to the first node.

In an embodiment, during the uplink transmission of the model, if the transmission link is changed, the first node may send third request information to the second node, to request the second node to send the transmitted portion of the first model, where the transmitted portion has been transmitted at the second node.

In an embodiment, the second node may receive the third request information sent from the first node, and then send the transmitted portion of the first model to the first node.

In an embodiment, the first node may receive the transmitted portion of the first model sent from the second node, and then continue to receive the untransmitted portion of the first model transmitted by the terminal. After the reception is completed, the transmitted portion and the untransmitted portion of the first model may be combined into the entire model content for model application in the new access link.

In an embodiment, the third request information includes one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

In an embodiment, the second node may receive model transmission associated information sent from the first node to indicate the transmitted portion of the first model. After receiving the model transmission associated information, the second node may send the transmitted portion of the first model to the first node based on the indication.

In an embodiment, the second node may receive, from the first node, one or more of the unique identifier of the first model, the segment numbers of the transmitted portion, the content identifier of the transmitted portion, the number of bits of the transmitted portion, the segment numbers of the untransmitted portion, the content identifier of the untransmitted portion, the number of bits of the untransmitted portion, the indication information, or the model indication information, which is used to help terminal confirm the first model. The second node itself may confirm the transmitted portion of the first model that has been transmitted, and then transmit the transmitted portion of the first model to the first node.

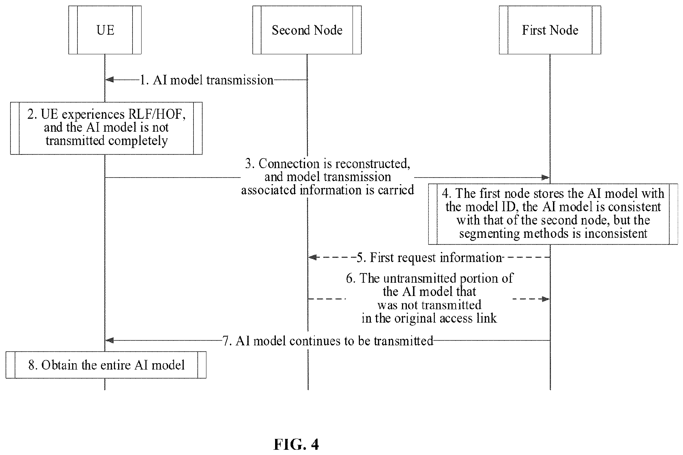

FIG. 4 is a first schematic flowchart of transmitting an AI model from a network to a UE according to an embodiment of the present application. As shown in FIG. 4, in an embodiment of the present application, as an example, the terminal is a UE. A radio link failure (RLF) or a handover failure (HOF) occurs in the process of transmitting the AI model from the network to the UE. The AI model is not transmitted completely in the original link. The first node to which the new link belongs may obtain the remaining AI model information from the second node to which the original link belongs, and then continue to send the remaining AI model information. The specific steps are as follows:
step 1, the second node partitionally sends the AI model to the UE. The partitioned/segmented transmission method may be: a segmented transmission intercepted according to the RRC signaling format at a suitable place (such as at an end of an entire field), segmented transmission intercepted according to the subdivided functional items in the AI model, or segmented transmission intercepted according to the string size (such as the number of bits).

Step 2, the UE experiences RLF/HOF at the second node, and the AI model is not fully transmitted.

Step 3, the UE is reconnected to the first node, and the signaling sent from the UE to the first node carries the model transmission associated information that is not transmitted completely at the second node, including one or more of the following: a model ID, a model functionality, a segment numbering of the transmitted portion, a content identifier of the transmitted portion, a number of bits of the transmitted portion, a segment numbering of the untransmitted portion, a content identifier of the untransmitted portion, or a number of bits of the untransmitted portion;
indication information, the indication information being used to indicate that there is a model that has not been transmitted completely; or
model indication information, the model indication information being used to indicate that the first model has the untransmitted portion.

Step 4a, the AI model used by the UE at the second node is consistent with that used by the first node, but the partitioning/segmenting methods are inconsistent. The first node may directly send the AI model saved by the first node to the UE, and the UE needs to receive the entire AI model from the air interface. The method may cause excessive unnecessary data to be transmitted over the air interface, and the AI model information received by the UE in the original link is invalid and needs to be discarded.

Step 4b, the AI model used by the UE at the second node is consistent with that used by the first node, but the partitioning/segmenting methods are inconsistent. The first node may request the remaining portion of the AI model from the second node, as in steps 5 and 6. The method reduces air interface signaling overhead, and the first node and the second node are directly connected using a wired network interface, so the amount of information transmission is almost unrestricted.

Step 5, the first node requests the remaining portion of the AI model from the second node, where the request content may include but is not limited to: a unique identifier of the AI model (used to indicate which AI model information is being transmitted), a segment numbering of the transmitted portion, a content identifier of the transmitted portion, a number of bits of the transmitted portion, a segment numbering of the untransmitted portion, a content identifier of the untransmitted portion, or a number of bits of the untransmitted portion;
indication information, the indication information being used to indicate that there is a model that has not been transmitted completely; or
model indication information, the model indication information being used to indicate that the first model has the untransmitted portion.

In an embodiment, for step 5, it is also possible to only indicate the unique identifier of the AI model, and the second node knows which portions of the AI model have not been completely sent to the UE based on the AI model transmission status in case that the UE is connected to the second node.

Step 6, the second node transmits the remaining portion of the AI model to the first node. For example, the second node may send, according to the segment numbering of the transmitted portion, the content identifier of the transmitted portion, the number of bits of the transmitted portion, the segment numbering of the untransmitted portion, the content identifier of the untransmitted portion or the number of bits of the untransmitted portion indicated in step 5, or according to a portion of the AI model that the second node has saved but has not been completely sent to the UE, the remaining portion to the first node.

Step 7, after receiving the remaining portion of the AI model, the first node continues to send the remaining portion of the AI model to the UE.

Step 8, after receiving the remaining portion of the AI model sent from the first node, the UE combines the remaining portion of the AI model with the previous portion of the AI model content received at the second node to obtain the entire AI model, and continues to perform model inference at the first node.

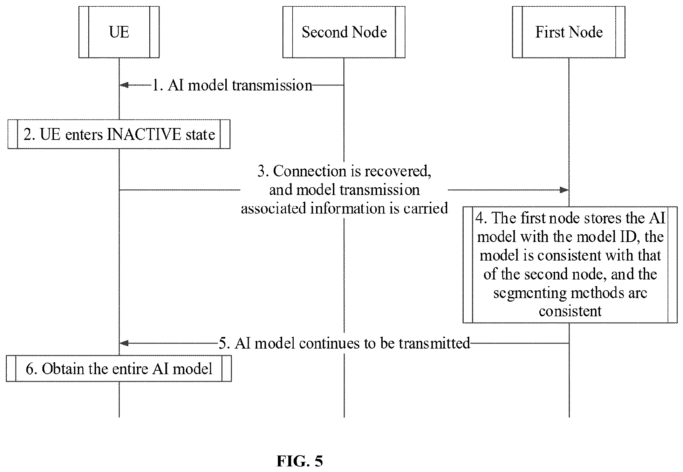

FIG. 5 is a second schematic flowchart of transmitting an AI model from a network to a UE according to an embodiment of the present application. As shown in FIG. 5, in an embodiment of the present application, as an example, the terminal is a UE. The network leaves the connected state in the process of transmitting the AI model from the network to the UE, the AI model is not fully transmitted in the original link, and the first node to which the new link belongs continues to send the AI model to the UE. The specific steps are as follows:
Step 1, the second node partitionally sends the AI model to the UE. The partitioned/segmented transmission method may be: a segmented transmission intercepted according to the RRC signaling format after intercepting at a suitable place (such as at an end of an entire field), segmented transmission intercepted according to the subdivided functional items in the AI model, or segmented transmission intercepted according to the string size (such as the number of bits).
Step 2, the UE leaves the connected state at the second node and enters the inactive state (or idle state), and the AI model transmission is not fully completed.
Step 3, the UE is reconnected to the second node. The signaling sent from the UE to the second node carries the model transmission associated information that is not transmitted at the first node, including one or more of the following: a model ID, a model functionality, a segment numbering of the transmitted portion, a content identifier of the transmitted portion, a number of bits of the transmitted portion, a segment numbering of the untransmitted portion, a content identifier of the untransmitted portion or a number of bits of the untransmitted portion;
indication information, the indication information being used to indicate that there is a model that has not been transmitted completely; or
model indication information, the model indication information being used to indicate that the first model has the untransmitted portion.
Step 4, the AI model used by the UE at the second node is consistent with that used by the first node, and the partitioning/segmenting methods are also inconsistent. The first node may directly send the remaining portion of the AI model to the UE according to the model transmission associated information obtained in step 3 or according to the AI model content saved in the first node (step 5).
Step 5, the first node continues to send the remaining portion of the AI model to the UE.
Step 6, after receiving the remaining portion of the AI model sent from the first node, the UE combines the remaining portion of the AI model with the previous portion of the AI model content received at the second node to obtain the entire AI model, and continues to perform model inference at the first node.

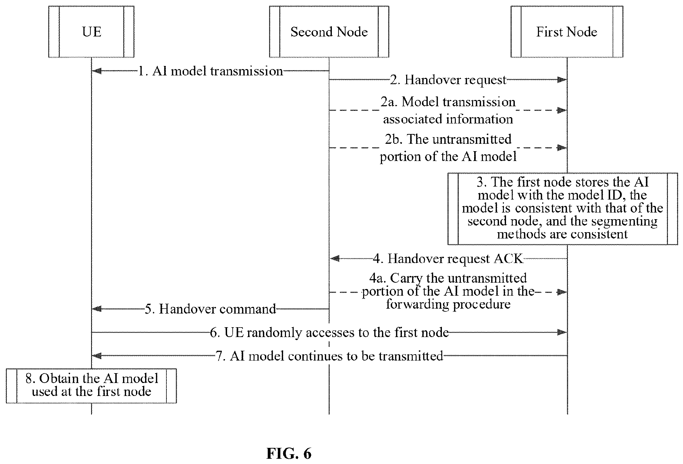

FIG. 6 is a third schematic flowchart of transmitting an AI model from a network to a UE according to an embodiment of the present application. As shown in FIG. 6, in an embodiment of the present application, as an example, the terminal is a UE. Handover (HO) occurs in the process of transmitting the AI model to the base station. The specific steps are as follows:
Step 1, the second node partitionally sends the AI model to the UE. The partitioned/segmented transmission method may be: a segmented transmission intercepted according to the RRC signaling format at a suitable place (such as at an end of an entire field), segmented transmission intercepted according to the subdivided functional items in the AI model, or segmented transmission intercepted according to the string size (such as the number of bits).
Step 2, the second node completes the handover decision and initiates a handover preparation procedure to the first node.
Step 2a, the second node may send the model transmission associated information that the UE has not transmitted completely at the second node in a message initiating handover preparation procedure to the first node or by using a separate message, including one or more of the following: a model ID, a model functionality, a segment numbering of the transmitted portion, a content identifier of the transmitted portion, a number of bits of the transmitted portion, a segment numbering of the untransmitted portion, a content identifier of the untransmitted portion, a number of bits of the untransmitted portion; indication information, the indication information being used to indicate that there is a model that has not been transmitted completely; or model indication information, the model indication information being used to indicate that the first model has the untransmitted portion.
Step 2b, the second node may send the untransmitted portion of the AI model that the UE has not transmitted completely at the second node in a message initiating handover preparation procedure to the first node or by using a separate message.
Step 3, if the first node saves the AI model with the model ID and the model is consistent with that used by the second node, then:
   if the partitioning/segmenting method of AI model at the first node is consistent with the partitioning/segmenting method of the second node, the first node may directly transmit the remaining portion of the AI model to the UE (step 7) according to the model transmission associated information obtained in step 2a; or
   the first node may directly transmit the remaining portion of the AI model to the UE (step 7) according to the remaining portion of the AI model obtained in step 2b; or
   the first node may request the second node to send the remaining AI model through the data forwarding procedure.
Step 4, the first node sends a handover request ACK message to the second node, where the message carries a handover command for the UE. In step 4, if the first node determines that the second node needs to send the remaining AI model, the handover command may carry the relevant AI model status, including one or more of the following: a model ID, a model functionality, a segment numbering of the transmitted portion, a content identifier of the transmitted portion, a number of bits of the transmitted portion, a segment numbering of the untransmitted portion, a content identifier of the untransmitted portion, a number of bits of the untransmitted portion; indication information, the indication information being used to indicate that there is a model that has not been transmitted completely; or model indication information, the model indication information being used to indicate that the first model has the untransmitted portion.
Step 4a, based on step 4, the second node reuses the data forwarding procedure to send the remaining portion of the AI model to the first node.
Step 5, the second node sends a handover command to the UE.
Step 6, the UE disconnects from the second node and initiates random access to the first node; at this time, the UE saves portions of the AI model content received at the second node.
Step 7, the first node continues to send the remaining portion of the AI model to the UE.
Step 8, After receiving the remaining portion of the AI model sent from the first node, the UE combines the remaining portion of the AI model with the previous portion of the AI model content received at the second node to obtain the entire AI model, and continues to perform model inference at the first node.

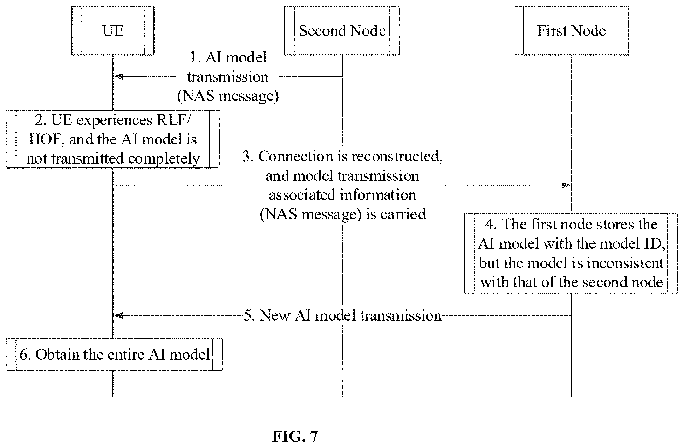

FIG. 7 is a fourth schematic flowchart of transmitting an AI model from a network to a UE according to an embodiment of the present application. As shown in FIG. 7, in an embodiment of the present application, as an example, the AI model is sent from the core network. After the core network node transmits the AI model to the UE, if RLF/HOF occurs at the UE, the UE is reconnected and the core network node is changed. The specific steps are as follows.

Step 1, the second node of the core network partitionally sends the AI model to the UE. In case that the AI model is saved in the core network, the core network may send the AI model to the UE through core network associated messages, such as non-access-atratum (NAS) messages, LTE positioning protocol (LPP) messages, etc. The partitioned/segmented transmission method may be: a segmented transmission intercepted according to the RRC signaling format at a suitable place (such as at an end of an entire field), segmented transmission intercepted according to the subdivided functional items in the AI model, or segmented transmission intercepted according to the string size (such as the number of bits).

Step 2, the UE experiences a radio link failure or handover failure, disconnects the connection with the air interface and disconnects the connection with the second node of the core network. At this time, the AI model is not fully transmitted.

Step 3, the UE is reconnected to the base station and then is connected to the first node of the core network. The signaling (NAS message, LPP message, etc.) sent from the UE to the first node carries the model transmission associated information that has not been transmitted completely at the second node, including one or more of the following: a model ID, a model functionality, a segment numbering of the transmitted portion, a content identifier of the transmitted portion, a number of bits of the transmitted portion, a segment numbering of the untransmitted portion, a content identifier of the untransmitted portion, a number of bits of the untransmitted portion; indication information, the indication information being used to indicate that there is a model that has not been transmitted completely; or model indication information, the model indication information being used to indicate that the first model has the untransmitted portion.

Step 4, the AI model used by the UE at the second node is inconsistent with that used by the first node. The inconsistency may be that the first node does not save the AI model; or the first node saves the AI model, but it is different from the model used by the UE at the second node (for example, the first node updates the model, and therefore uses the updated AI model for model inference).

Step 5, the first node directly initiates the transmission of the new AI model to the UE.

Step 6, after receiving the AI model sent from the first node, the UE saves the AI model and uses the AI model to perform model inference at the first node.

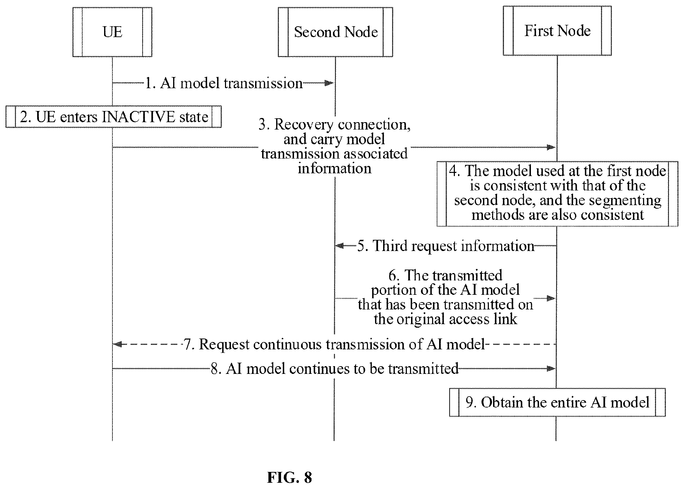

FIG. 8 is a schematic flowchart of transmitting an AI model from a UE to a network according to an embodiment of the present application. As shown in FIG. 8, in an embodiment of the present application, as an example, the terminal is a UE. The AI model is sent from UE. The specific steps are as follows.

Step 1, the UE partitionally sends the AI model to the second node. The partitioned/segmented transmission method may be: a segmented transmission intercepted according to the RRC signaling format at a suitable place (such as at an end of an entire field), segmented transmission intercepted according to the subdivided functional items in the AI model, or segmented transmission intercepted according to the string size (such as the number of bits).

Step 2, the UE leaves the connected state at the second node and enters the inactive state, and the AI model is not fully transmitted.

Step 3, the UE is reconnected to the first node, and the signaling sent from the UE to the first node carries the model transmission associated information that has not been transmitted completely at the second node, including one or more of the following: a model ID, a model functionality, a segment numbering of the transmitted portion, a content identifier of the transmitted portion, a number of bits of the transmitted portion, a segment numbering of the untransmitted portion, a content identifier of the untransmitted portion, a number of bits of the untransmitted portion; indication information, the indication information being used to indicate that there is a model that has not been transmitted completely; or model indication information, the model indication information being used to indicate that the first model has the untransmitted portion.

Step 4, the AI model used by the UE at the second node is consistent with that used at the first node, and the partitioning/segmenting methods are also inconsistent. It is determined that the transmission may be continued.

Step 5, the first node requests the transmitted AI model from the second node, and the request information carries the model transmission associated information that has not been transmitted completely, including one or more of the following: a model ID, a model functionality, a segment numbering of the transmitted portion, a content identifier of the transmitted portion, a number of bits of the transmitted portion, a segment numbering of the untransmitted portion, a content identifier of the untransmitted portion, a number of bits of the untransmitted portion; indication information, the indication information being used to indicate that there is a model that has not been transmitted completely; or model indication information, the model indication information being used to indicate that the first model has the untransmitted portion.

Step 6, the second node sends the received portion of the AI model content to the first node.

Step 7, the first node requests the UE to continue sending the AI model, where the UE may also directly perform step 8 to continue sending the remaining AI model content.

Step 8, the UE continues to send the remaining AI model content to the first node.

Step 9, after receiving the remaining portion of the AI model sent from the UE, the first node combines the remaining portion of the AI model with the previous portion of the AI model content obtained from the second node to obtain the entire AI model, and continues to perform model inference at the first node.

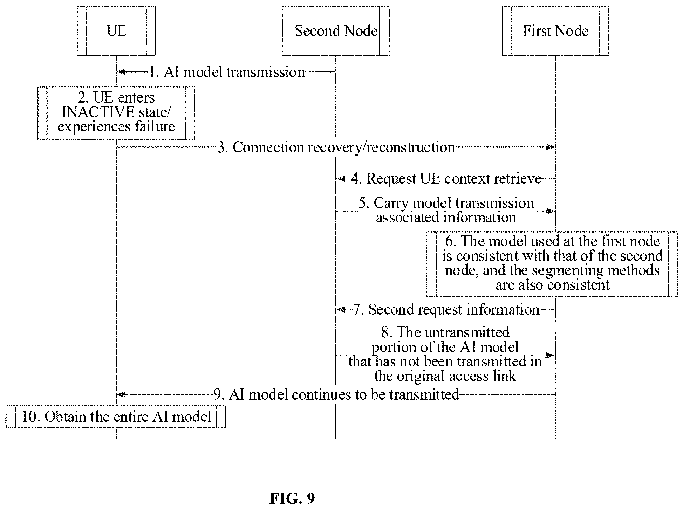

FIG. 9 is a fifth schematic flowchart of transmitting an AI model from a network to a UE according to an embodiment of the present application. As shown in FIG. 9, in an embodiment of the present application, as an example, the terminal is a UE. The network leaves the connected state or experiences RLF/HOF in the process of transmitting the AI model from the network to the UE, the AI model is not fully transmitted in the original link, and the first node to which the new link belongs continues to send the AI model to the UE. The specific steps are as follows:
Step 1, the second node sends the AI model to the UE in parts. The partitioned/segmented transmission method may be: a segmented transmission intercepted according to the RRC signaling format at a suitable place (such as at an end of an entire field), segmented transmission intercepted according to the subdivided functional items in the AI model, or segmented transmission intercepted according to the string size (such as the number of bits).
Step 2, the UE leaves the connected state at the second node and enters the inactive state (or idle state), or the UE experiences RLF/HOF at the second node and the AI model is not fully transmitted.
Step 3, the UE connection is reconnected/reestablished to the first node.
Step 4, the first node requests the UE context from the second node.
Step 5, the second node notifies the first node that it saves an AI model that has not transmitted completely in a UE context retrieval reply message sent to the first node, or the UE context directly carries the model transmission associated information, including one or more of the following: a model ID, a model functionality, a segment numbering of the transmitted portion, a content identifier of the transmitted portion, a number of bits of the transmitted portion, a segment numbering of the untransmitted portion, a content identifier of the untransmitted portion or a number of bits of the untransmitted portion; or, the second node notifies the first node that it saves an AI model that has not transmitted completely, and the second node may also use new signaling to send the AI model that has not transmitted completely, independent of the UE context retrieval process.
Step 6, if the AI model used by the UE at the second node is consistent with that used by the first node, and the partitioning/segmenting methods are also inconsistent, the first node may directly send the remaining portion of the AI model to the UE according to the model transmission associated information obtained in step 5. If the first node does not save the model, or the partitioning/segmentation method of the saved model is inconsistent with the partitioning/segmentation method of the second node, step 7 may be triggered.
Step 7, the first node requests the second node to send the remaining portion of the AI model, and the request information may or may not carry the model transmission associated information.
Step 8, the second node sends the remaining portion of the AI model to the first node.
Step 9, after receiving the remaining portion of the AI model, the first node continues to send the remaining portion of the AI model to the UE.
Step 10, after receiving the remaining portion of the AI model sent from the first node, the UE combines the remaining portion of the AI model with the previous portion of the AI model content received at the second node to obtain the entire AI model, and continues to perform model inference at the first node.

The terminal device according to the embodiments of the present application may be a device that provides voice and/or data connectivity to a user, a handheld device with a wireless connection function, or other processing devices connected to a wireless modem. In different systems, the name of the terminal device may also be different. For example, in the 5G system, the terminal device may be called user equipment (UE). A wireless terminal device may communicate with one or more core networks (CN) via a radio access network (RAN). The wireless terminal device may be a mobile terminal device, such as a mobile phone (or "cellular" phone) and a computer with a mobile terminal device, for example, a portable, pocket-sized, handheld, computer-built-in or vehicle-mounted mobile device, which exchanges voice and/or data with the radio access network. For example, a personal communication service (PCS) phone, a cordless phone, a session initiated protocol (SIP) phone, a wireless local loop (WLL) station, a personal digital assistant (PDA), and the like. The wireless terminal device may also be referred to as a system, a subscriber unit, a subscriber station, a mobile station, a mobile, a remote station, an access point, a remote terminal, an access terminal, a user terminal, a user agent, or a user device, but is not limited in the embodiments of the present application.

The network control center of the embodiments of the present application may be a base station, which may include multiple cells providing services for terminals. Depending on the specific application scenario, the base station may also be called an access point, or may be a device in an access network that communicates with wireless terminal devices through one or more sectors on the air interface, or may be called another name. The network device may be used to convert received air frames into Internet Protocol (IP) packets and vice versa, acting as a router between the wireless terminal device and the rest of the access network, where the rest of the access network may include an Internet Protocol (IP) communication network. The network device may also coordinate the management of attributes of the air interface. For example, the network device in the embodiments of the present application may be a network device (base transceiver station, BTS) in the global system for mobile communications (GSM) or code division multiple access (CDMA), or a network device (NodeB) in wide-band code division multiple access (WCDMA), or an evolved network device (eNB or e-NodeB) in the Long Term Evolution (LTE) system, or a 5G base station (gNB) in the 5G network architecture (next generation system), or a Home evolved Node B (HeNB), a relay node, a femto, a pico, etc., but is not limited in the embodiments of the present application. In some network structures, a network device may include a centralized unit (CU) node and a distributed unit (DU) node. The centralized unit and the distributed unit may also be geographically separated.

The network device and the terminal device each may use one or more antennas for multiple input multiple output (MIMO) transmission. MIMO transmission may be single-user MIMO (SU-MIMO) transmission or multi-user MIMO (MU-MIMO) transmission. Depending on the mode and number of antenna combinations, MIMO transmission may be a 2D-MIMO transmission, a 3D-MIMO transmission, a full dimension (FD)-MIMO, or a massive-MIMO, and may also be a diversity transmission, a precoding transmission, or a beamforming transmission.

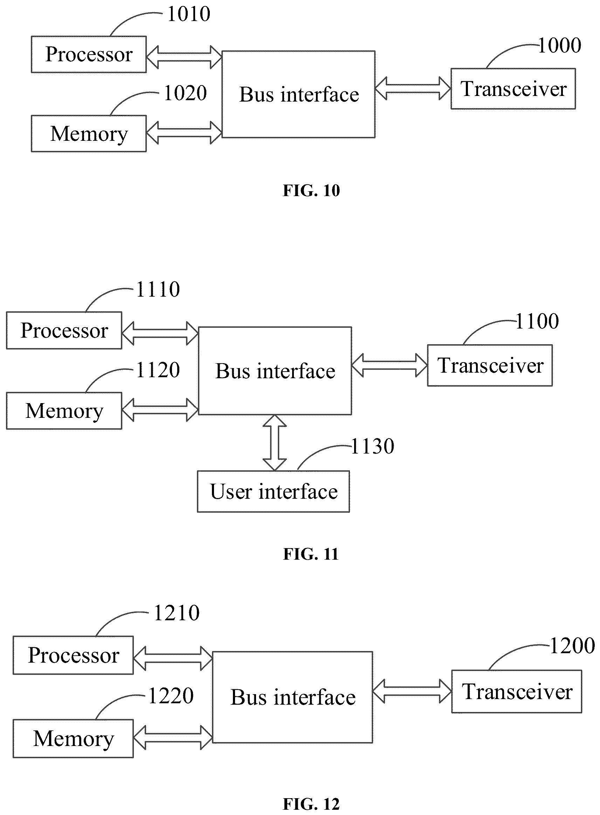

FIG. 10 is a schematic structural diagram of a terminal according to an embodiment of the present application. As shown in FIG. 10, the terminal includes a memory 1020, a transceiver 1000, and a processor 1010.

The memory 1020 is used for storing a computer program; the transceiver 1000 is used for receiving and transmitting data under control of the processor 1010; and the processor 1010 is used for reading the computer program in the memory 1020 and performing the following operations:
obtaining model transmission associated information, where the model transmission associated information is used to indicate that a first model has an untransmitted portion, and a transmitted portion of the first model has been transmitted in an original access link;
transmitting the untransmitted portion of the first model in a new access link or transmitting a second model in a new access link;
where the new access link is a link between a terminal and the first node, the original access link is a link between the terminal and a second node, and the second model is a model required by the new access link.

In an example, the transceiver 1000 is used for receiving and transmitting data under control of the processor 1010.

In FIG. 10, a bus architecture may include any number of interconnected buses and bridges, linking together by various circuits of one or more processors represented by processor 1010 and memory represented by memory 1020. The bus architecture may also link together various other circuits such as peripheral devices, voltage regulators, and power management circuits, which are all well known in the art and, therefore, will not be described further herein. The bus interface provides the interface. The transceiver 1000 may be multiple components, including a transmitter and a receiver, providing a unit for communicating with various other devices over a transmission medium, such as a wireless channel, a wired channel, an optical cable, or the like.

The processor 1010 is responsible for managing the bus architecture and general processing, and the memory 1020 may store data used by the processor 1010 when performing operations.

In an example, the processor 1010 may be a central processing unit (CPU), an application specific integrated circuit (ASIC), a field programmable gate array (FPGA), or a complex programmable logic device (CPLD). The processor may also adopt a multi-core architecture.

The processor invokes the computer program stored in the memory to execute any of the methods provided in the embodiments of the present application according to the obtained executable instructions. The processor and memory may also be physically separated.

In an example, the processor 1010 is further used to obtain one or more of the following:
a unique identifier of the first model;
a segment numbering of the transmitted portion;
a content identifier of the transmitted portion;
a number of bits of the transmitted portion;
a segment numbering of the untransmitted portion;
a content identifier of the untransmitted portion;
a number of bits of the untransmitted portion;
indication information, the indication information being used to indicate that there is a model that has not been transmitted completely; or
model indication information, the model indication information being used to indicate that the first model has the untransmitted portion.

In an example, the processor 1010 is further used to:
determine, based on the model transmission associated information, that the model required by the new access link includes the first model, and determining to transmit the untransmitted portion of the first model in the new access link; or
determine, based on the model transmission associated information, that the model required by the new access link does not include the first model, and determine to transmit the second model in the new access link.

In an example, the processor 1010 is further used to:
send the untransmitted portion saved by the first node to the terminal; or
receive the untransmitted portion sent from the second node, and send the untransmitted portion to the terminal.

In an example, the processor 1010 is further used to:
send second request information to the second node, where the second request information is used to request the untransmitted portion.

In an example, the processor 1010 is further used to send one or more of the following:
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

In an example, the processor 1010 is further used to:
request the second node to transmit the untransmitted portion through a data forwarding procedure.

In an example, the processor 1010 is further used to:
receive the untransmitted portion sent from the second node through a data forwarding procedure.

In an example, the processor 1010 is further used to:
send first request information to the terminal, where the first request information is used to request the untransmitted portion; and
receive the untransmitted portion sent from the terminal.

In an example, the processor 1010 is further used to send one or more of the following:
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

In an example, the processor 1010 is further used to:
receive the untransmitted portion sent from the second node.

In an example, the processor 1010 is further used to:
send third request information to the second node, where the third request information is used to request the untransmitted portion; and
receive the untransmitted portion sent from the second node.

In an example, the processor 1010 is further used to send one or more of the following:
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

In an example, the processor 1010 is further used to:
receive the model transmission associated information sent from the terminal; or
receive the model transmission associated information sent from the second node.

It should be noted here that the above-mentioned first node provided in the embodiment of the present application may implement all the method steps implemented by the method embodiment in which the execution body is the first node, and may achieve the same technical effect. The parts and beneficial effects of this embodiment that are the same as those of the method embodiment will not be described in detail here.

FIG. 11 is a schematic structural diagram of a terminal according to an embodiment of the present application. As shown in FIG. 11, the initial RAN includes a memory 1120, a transceiver 1100, and a processor 1110.

The memory 1120 is used for storing a computer program; the transceiver 1100 is used for receiving and transmitting data under control of the processor 1110; and the processor 1110 is used for reading the computer program in the memory 1120 and performing the following operations:
transmitting an untransmitted portion of a first model in a new access link, or transmitting a second model in a new access link;
where a transmitted portion of the first model has been transmitted in an original access link, the new access link is a link between the terminal and a first node, the original access link is a link between the terminal and a second node, and the second model is a model required by the new access link.

In an example, the transceiver 1100 is used for receiving and transmitting data under control of the processor 1110.

In FIG. 11, a bus architecture may include any number of interconnected buses and bridges, linking together various circuits of one or more processors represented by processor 1110 and memory represented by memory 1120. The bus architecture may also link together various other circuits such as peripheral devices, voltage regulators, and power management circuits, which are all well known in the art and, therefore, will not be described further herein. The bus interface provides the interface. The transceiver 1100 may be multiple components, including a transmitter and a receiver, providing a unit for communicating with various other devices over a transmission medium, such as a wireless channel, a wired channel, an optical cable, or the like. For different user devices, the user interface 1130 may also be an interface capable of connecting to external or internal devices as required, and the connected devices include but are not limited to a keypad, a display, a speaker, a microphone, a joystick, and the like.

The processor 1110 is responsible for managing the bus architecture and general processing, and the memory 1120 may store data used by the processor 1110 when performing operations.

In an example, the processor 1110 may be a central processing unit (CPU), an application specific integrated circuit (ASIC), a field programmable gate array (FPGA), or a complex programmable logic device (CPLD). The processor may also adopt a multi-core architecture.

The processor invokes the computer program stored in the memory to execute any of the methods provided in the embodiments of the present application according to the obtained executable instructions. The processor and memory may also be physically separated.

In an example, the processor 1110 is further used to:
send model transmission associated information to the first node, where the model transmission associated information is used to indicate that a first model has an untransmitted portion.

In an example, the processor 1110 is further used to send one or more of the following:
a unique identifier of the first model;
a segment numbering of the transmitted portion;
a content identifier of the transmitted portion;
a number of bits of the transmitted portion;
a segment numbering of the untransmitted portion;
a content identifier of the untransmitted portion;
a number of bits of the untransmitted portion;
indication information, the indication information being used to indicate that there is a model that has not been transmitted completely; or
model indication information, the model indication information being used to indicate that the first model has the untransmitted portion.

In an example, the processor 1110 is further used to:
receive the untransmitted portion sent from the first node.

In an example, the processor 1110 is further used to:
receive first request information sent from the first node, where the first request information is used to request the untransmitted portion; and
send, based on the first request information, the untransmitted portion to the first node.

In an example, the processor 1110 is further used to receive one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

It should be noted here that the above-mentioned terminal provided in the embodiment of the present application may implement all the method steps implemented by the method embodiment in which the execution body is the terminal, and may achieve the same technical effect. The parts and beneficial effects of this embodiment that are the same as those of the method embodiment will not be described in detail here.

FIG. 12 is a schematic structural diagram of a second node according to an embodiment of the present application. As shown in FIG. 12, the network control center includes a memory 1220, a transceiver 1200, and a processor 1210.

The memory 1220 is used for storing a computer program; the transceiver 1200 is used for receiving and transmitting data under control of the processor 1210; and the processor 1210 is used for reading the computer program in the memory 1220 and performing the following operations:
sending model transmission associated information to a first node, where the model transmission associated information is used to indicate that a first model has an untransmitted portion, a transmitted portion of the first model has been transmitted in an original access link, the original access link is a link between a terminal and the second node, and the second node is a node that the terminal is connected to before being connected to the first node.

In an example, the transceiver 1200 is used for receiving and transmitting data under control of the processor 1210.

In FIG. 12, a bus architecture may include any number of interconnected buses and bridges, linking together by various circuits of one or more processors represented by processor 1210 and memory represented by memory 1220. The bus architecture may also link together various other circuits such as peripheral devices, voltage regulators, and power management circuits, which are all well known in the art and, therefore, will not be described further herein. The bus interface provides the interface. The transceiver 1200 may be multiple components, including a transmitter and a receiver, providing a unit for communicating with various other devices over a transmission medium, such as a wireless channel, a wired channel, an optical cable, or the like. The processor 1210 is responsible for managing the bus architecture and general processing, and the memory 1220 may store data used by the processor 1210 when performing operations.

In an example, the processor 1210 may be a central processing unit (CPU), an application specific integrated circuit (ASIC), a field programmable gate array (FPGA), or a complex programmable logic device (CPLD). The processor may also adopt a multi-core architecture.

The processor invokes the computer program stored in the memory to execute any of the methods provided in the embodiments of the present application according to the obtained executable instructions. The processor and memory may also be physically separated.

In an example, the processor 1210 is further used to send one or more of the following:
a unique identifier of the first model;
a segment numbering of the transmitted portion;
a content identifier of the transmitted portion;
a number of bits of the transmitted portion;
a segment numbering of the untransmitted portion;
a content identifier of the untransmitted portion;
a number of bits of the untransmitted portion;
indication information, the indication information being used to indicate that there is a model that has not been transmitted completely; or
model indication information, the model indication information being used to indicate that the first model has the untransmitted portion.

In an example, the processor 1210 is further used to:
send the untransmitted portion of the first model to the first node.

In an example, the processor 1210 is further used to:
receive second request information sent from the first node, where the second request information is used to request the untransmitted portion.

In an example, the processor 1210 is further used to receive one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

In an example, the processor 1210 is further used to:
send the transmitted portion to the first node.

In an example, the processor 1210 is further used to:
receive third request information sent from the first node, where the third request information is used to request the untransmitted portion; and
send, based on the third request information, the transmitted portion to the first node.

In an example, the processor 1210 is further used to receive one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

It should be noted here that the above-mentioned first node provided in the embodiment of the present application may implement all the method steps implemented by the method embodiment in which the execution body is the first node, and may achieve the same technical effect. The parts and beneficial effects of this embodiment that are the same as those of the method embodiment will not be described in detail here.

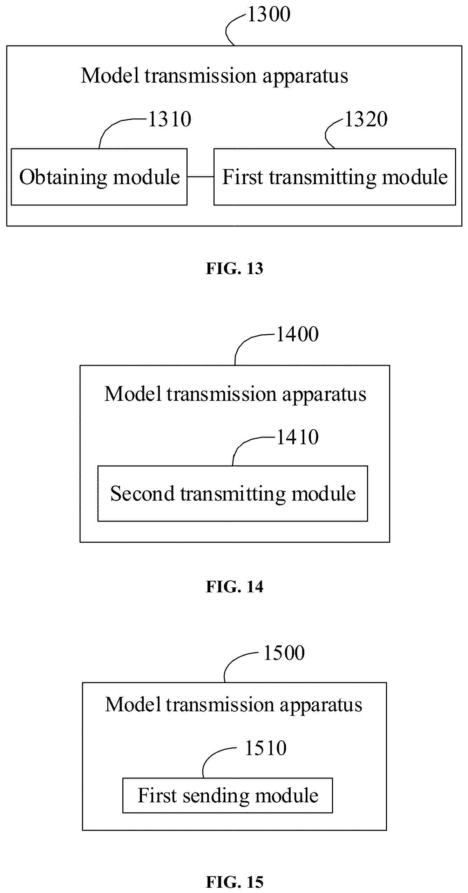

FIG. 13 is a first schematic structural diagram of a model transmission apparatus according to an embodiment of the present application. As shown in FIG. 13, the model transmission apparatus 1300 includes:
an obtaining module 1310, configured to obtain model transmission associated information, where the model transmission associated information is used to indicate that a first model has an untransmitted portion, and a transmitted portion of the first model has been transmitted in an original access link;
a first transmitting module 1320, configured to transmit an untransmitted portion of a first model in a new access link, or transmit a second model in a new access link;
where the new access link is a link between a terminal and the first node, the original access link is a link between the terminal and a second node, and the second model is a model required by the new access link.

In an example, the obtaining module 1310 is further used to obtain one or more of the following:
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

In an example, the first transmitting module 1320 is further used to:
determine, based on the model transmission associated information, that the model required by the new access link includes the first model, and determine to transmit the untransmitted portion of the first model in the new access link; or
determine, based on the model transmission associated information, that the model required by the new access link does not include the first model, and determine to transmit the second model in the new access link.

In an example, the first transmitting module 1320 is further used to:
send the untransmitted portion saved by the first node to the terminal; or
receive the untransmitted portion sent from the second node, and send the untransmitted portion to the terminal.

In an embodiment, the model transmission apparatus further includes:
a first request module, configured to send second request information to the second node before receiving the untransmitted portion sent from the second node, where the second request information is used to request the untransmitted portion.

In an embodiment, the first request module is further used to request one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

In an example, the first request module 1320 is further used to:
request the second node to transmit the untransmitted portion through a data forwarding procedure.

In an example, the first transmitting module 1320 is further used to:
receive the untransmitted portion sent from the second node through the data forwarding procedure.

**In** an example, the first transmitting module 1320 is further used to:
send first request information to the terminal, where the first request information is used to request the untransmitted portion; and
receive the untransmitted portion sent from the terminal.

**In** an embodiment, the first transmitting module 1320 is further used to request one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

In an embodiment, the model transmission apparatus 1300 further includes:
a first receiving module, configured to receive the untransmitted portion sent from the second node.

In an embodiment, the model transmission apparatus 1300 further includes:
a second sending module, configured to send third request information to the second node, where the third request information is used to request the untransmitted portion; and
a second receiving module, configured to receive the untransmitted portion sent from the second node.

In an embodiment, the second sending module is further used to send one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

In an example, the obtaining module 1310 is further used to:
receive the model transmission associated information sent from the terminal; or
receive the model transmission associated information sent from the second node.

It should be noted here that the above-mentioned terminal provided in the embodiment of the present application may implement all the method steps implemented by the method embodiment in which the execution body is the terminal, and may achieve the same technical effect. The parts and beneficial effects of this embodiment that are the same as those of the method embodiment will not be described in detail here.

FIG. 14 is a second schematic structural diagram of a model transmission apparatus according to an embodiment of the present application. As shown in FIG. 14, the model transmission apparatus 1400 includes:
a second transmitting module 1410, configured to transmit an untransmitted portion of a first model in a new access link, or transmit a second model in a new access link;
where a transmitted portion of the first model has been transmitted in an original access link, the new access link is a link between the terminal and a first node, the original access link is a link between the terminal and a second node, and the second model is a model required by the new access link.

In an embodiment, the model transmission apparatus 1400 further includes:
a third sending module, configured to send model transmission associated information to the first node, where the model transmission associated information is used to indicate that a first model has an untransmitted portion.

In an embodiment, the third sending module is further used to send one or more of the following:
a unique identifier of the first model;
a segment numbering of the transmitted portion;
a content identifier of the transmitted portion;
a number of bits of the transmitted portion;
a segment numbering of the untransmitted portion;
a content identifier of the untransmitted portion;
a number of bits of the untransmitted portion;
indication information, the indication information being used to indicate that there is a model that has not been transmitted completely; or
model indication information, the model indication information being used to indicate that the first model has the untransmitted portion.

In an example, the second transmitting module 1410 is further used to:
receive the untransmitted portion sent from the first node.

In an example, the second transmitting module 1410 is further used to:
receive first request information sent from the first node, where the first request information is used to request the untransmitted portion; and
send, based on the first request information, the untransmitted portion to the first node.

In an embodiment, the second transmitting module 1410 is further used to receive one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

It should be noted here that the above-mentioned terminal provided in the embodiment of the present application may implement all the method steps implemented by the method embodiment in which the execution body is the terminal, and may achieve the same technical effect. The parts and beneficial effects of this embodiment that are the same as those of the method embodiment will not be described in detail here.

FIG. 15 is a third schematic structural diagram of a model transmission apparatus according to an embodiment of the present application. As shown in FIG. 15, the model transmission apparatus 1500 includes:
a first sending module 1510, configured to send model transmission associated information to a first node, where the model transmission associated information is used to indicate that a first model has an untransmitted portion, a transmitted portion of the first model has been transmitted in an original access link, the original access link is a link between a terminal and the second node, and the second node is a node that the terminal is connected to before being connected to the first node.

In an embodiment, the first sending module 1510 is further used to send one or more of the following:
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

In an embodiment, the model transmission apparatus 1500 further includes:
a fourth sending module, configured to send the untransmitted portion of the first model to the first node.

In an embodiment, the model transmission apparatus 1500 further includes:
a third receiving module, configured to receive second request information sent from the first node, where the second request information is used to request the untransmitted portion.

In an embodiment, the third receiving module is further used to receive one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

In an embodiment, the model transmission apparatus 1500 further includes:
a fifth sending module, configured to send the transmitted portion to the first node.

In an embodiment, the model transmission apparatus 1500 further includes:
a fourth receiving module, configured to receive third request information sent from the first node, where the third request information is used to request the untransmitted portion; and
a sixth sending module, configured to send, based on the third request information, the transmitted portion to the first node.

In an embodiment, the fourth receiving module is further used to receive one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

It should be noted here that the above-mentioned terminal provided in the embodiment of the present application may implement all the method steps implemented by the method embodiment in which the execution body is the terminal, and may achieve the same technical effect. The parts and beneficial effects of this embodiment that are the same as those of the method embodiment will not be described in detail here.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as USB flash disk, mobile hard disk, read-only memory (ROM), random access memory (RAM), magnetic disk, or optical disk.

According to an embodiment of the present application, a processor-readable storage medium is provided, where the processor-readable storage medium stores computer programs that cause a processor to perform the method provided in the above-mentioned embodiments.

In an embodiment, the processor-readable storage medium may be any available medium or data storage device that may be accessed by the computer, including but not limited to, a magnetic storage (e.g., a floppy disk, a hard disk, a magnetic tape, a magnetooptical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As well appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, devices (systems), and computer program products according to embodiments of the present application. It will be understood that each flow and/or block in the flow charts and/or block diagrams, and combinations thereof may be implemented by computer-executable instructions. These computer-executable instructions may be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory that may direct a computer or other programmable data processing device to operate in a specific manner, so that the instructions stored in the processor-readable memory produce a product including an instruction device that implements the functions specified in one or more processes in the flowchart and/or one or more blocks of the block diagram.

These processor-executable instructions may be loaded onto a computer or other programmable data processing device to cause a series of operational steps to be performed on the computer or other programmable device to produce a computer-implemented process and instructions performed on the computer or other programmable devices provide steps for performing the functions specified in one or more flows in the flowchart and/or one or more blocks of the block diagram.

It should be noted that those skilled in the art may make various modifications and variations to the present application without departing from the scope of the present application. If these modifications and variations on the present application are within the scope of the claims of the present application and their equivalent solutions, the present application is also intended to cover such modifications and variations.

## Claims

1. A model transmission method, performed by a first node, comprising:
obtaining model transmission associated information, wherein the model transmission associated information is used to indicate that a first model has an untransmitted portion, and a transmitted portion of the first model has been transmitted in an original access link; and
transmitting the untransmitted portion of the first model in a new access link or transmitting a second model in a new access link;
wherein the new access link is a link between a terminal and the first node, the original access link is a link between the terminal and a second node, and the second model is a model required by the new access link.

2. The model transmission method of claim 1, wherein the model transmission associated information comprises one or more of the following:
a unique identifier of the first model;
a segment numbering of the transmitted portion;
a content identifier of the transmitted portion;
a number of bits of the transmitted portion;
a segment numbering of the untransmitted portion;
a content identifier of the untransmitted portion;
a number of bits of the untransmitted portion;
indication information, the indication information being used to indicate that there is a model that has not been transmitted completely; or
model indication information, the model indication information being used to indicate that the first model has the untransmitted portion.

3. The model transmission method of claim 2, wherein transmitting the untransmitted portion of the first model in the new access link or transmitting the second model in the new access link comprises:
determining, based on the model transmission associated information, that the model required by the new access link comprises the first model, and determining to transmit the untransmitted portion of the first model in the new access link; or
determining, based on the model transmission associated information, that the model required by the new access link does not comprise the first model, and determining to transmit the second model in the new access link;

4. The model transmission method of claim 2 or 3, wherein transmitting the untransmitted portion of the first model in the new access link comprises:
sending the untransmitted portion saved by the first node to the terminal; or
receiving the untransmitted portion sent from the second node, and sending the untransmitted portion to the terminal.

5. The model transmission method of claim 4, wherein before receiving the untransmitted portion sent from the second node, the method further comprises:
sending second request information to the second node, wherein the second request information is used to request the untransmitted portion.

6. The model transmission method of claim 5, wherein the second request information comprises one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

7. The model transmission method of claim 5, wherein requesting the untransmitted portion from the second node comprises:
requesting the second node to transmit the untransmitted portion through a data forwarding procedure.

8. The model transmission method of any of claims 4 to 7, wherein receiving the untransmitted portion sent from the second node comprises:
receiving the untransmitted portion sent from the second node through a data forwarding procedure.

9. The model transmission method of any of claims 1 to 3, wherein transmitting the untransmitted portion of the first model in the new access link comprises:
sending first request information to the terminal, wherein the first request information is used to request the untransmitted portion; and
receiving the untransmitted portion sent from the terminal.

10. The model transmission method of claim 9, wherein the first request information comprises one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

11. The model transmission method of claim 9 or 10, wherein the method further comprises:
receiving the transmitted portion sent from the second node.

12. The model transmission method of claim 9 or 10, wherein the method further comprises:
sending third request information to the second node, wherein the third request information is used to request the transmitted portion; and
receiving the transmitted portion sent from the second node.

13. The model transmission method of claim 12, wherein the third request information comprises one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

14. The model transmission method of claim 1, wherein obtaining model transmission associated information comprises:
receiving the model transmission associated information sent from the terminal; or
receiving the model transmission associated information sent from the second node.

15. A model transmission method, performed by a terminal, comprising:
transmitting an untransmitted portion of a first model in a new access link, or transmitting a second model in a new access link;
wherein a transmitted portion of the first model has been transmitted in an original access link, the new access link is a link between the terminal and a first node, the original access link is a link between the terminal and a second node, and the second model is a model required by the new access link.

16. The model transmission method of claim 15, wherein the method further comprises:
sending model transmission associated information to the first node, wherein the model transmission associated information is used to indicate that a first model has an untransmitted portion.

17. The model transmission method of claim 16, wherein the model transmission associated information comprises one or more of the following:
a unique identifier of the first model;
a segment numbering of the transmitted portion;
a content identifier of the transmitted portion;
a number of bits of the transmitted portion;
a segment numbering of the untransmitted portion;
a content identifier of the untransmitted portion;
a number of bits of the untransmitted portion;
indication information, the indication information being used to indicate that there is a model that has not been transmitted completely; or
model indication information, the model indication information being used to indicate that the first model has the untransmitted portion.

18. The model transmission method of any of claims 15 to 17, wherein transmitting the untransmitted portion of the first model in the new access link comprises:
receiving the untransmitted portion sent from the first node.

19. The model transmission method of any of claims 15 to 17, wherein transmitting the untransmitted portion of the first model in the new access link comprises:
receiving first request information sent from the first node, wherein the first request information is used to request the untransmitted portion; and
sending, based on the first request information, the untransmitted portion to the first node.

20. The model transmission method of claim 19, wherein the first request information comprises one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

21. A model transmission method, performed by a second node, comprising:
sending model transmission associated information to a first node, wherein the model transmission associated information is used to indicate that a first model has an untransmitted portion, a transmitted portion of the first model has been transmitted in an original access link, the original access link is a link between a terminal and the second node, and the second node is a node that the terminal is connected to before being connected to the first node.

22. The model transmission method of claim 21, wherein the model transmission associated information comprises one or more of the following:
a unique identifier of the first model;
a segment numbering of the transmitted portion;
a content identifier of the transmitted portion;
a number of bits of the transmitted portion;
a segment numbering of the untransmitted portion;
a content identifier of the untransmitted portion;
a number of bits of the untransmitted portion;
indication information, the indication information being used to indicate that there is a model that has not been transmitted completely; or
model indication information, the model indication information being used to indicate that the first model has the untransmitted portion.

23. The model transmission method of claim 21 or 22, wherein the method further comprises:
sending the untransmitted portion of the first model to the first node.

24. The model transmission method of claim 21 or 22, wherein before sending the untransmitted portion of the first model to the first node, the method further comprises:
receiving second request information sent from the first node, wherein the second request information is used to request the untransmitted portion.

25. The model transmission method of claim 24, wherein the second request information comprises one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

26. The model transmission method of claim 21 or 22, wherein the method further comprises:
sending the transmitted portion to the first node.

27. The model transmission method of claim 21 or 22, wherein the method further comprises:
receiving third request information sent from the first node, wherein the third request information is used to request the transmitted portion; and
sending, based on the third request information, the transmitted portion to the first node.

28. The model transmission method of claim 27, wherein the third request information comprises one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

29. A first node, comprising: a memory, a transceiver, and a processor;
wherein the memory is used for storing a computer program; the transceiver is used for receiving and transmitting data under control of the processor; and the processor is used for reading the computer program in the memory and performing the following operations:
obtaining model transmission associated information, wherein the model transmission associated information is used to indicate that a first model has an untransmitted portion, and a transmitted portion of the first model has been transmitted in an original access link; and
transmitting the untransmitted portion of the first model in a new access link or transmitting a second model in a new access link;
wherein the new access link is a link between a terminal and the first node, the original access link is a link between the terminal and a second node, and the second model is a model required by the new access link.

30. The first node of claim 29, wherein the model transmission associated information comprises one or more of the following:
a unique identifier of the first model;
a segment numbering of the transmitted portion;
a content identifier of the transmitted portion;
a number of bits of the transmitted portion;
a segment numbering of the untransmitted portion;
a content identifier of the untransmitted portion;
a number of bits of the untransmitted portion;
indication information, the indication information being used to indicate that there is a model that has not been transmitted completely; or
model indication information, the model indication information being used to indicate that the first model has the untransmitted portion.

31. The first node of claim 30, wherein transmitting the untransmitted portion of the first model in the new access link or transmitting the second model in the new access link comprises:
determining, based on the model transmission associated information, that the model required by the new access link comprises the first model, and determining to transmit the untransmitted portion of the first model in the new access link; or
determining, based on the model transmission associated information, that the model required by the new access link does not include the first model, and determining to transmit the second model in the new access link.

32. The first node of claim 30 or 31, wherein transmitting the untransmitted portion of the first model in the new access link comprises:
sending the untransmitted portion saved by the first node to the terminal; or
receiving the untransmitted portion sent from the second node, and sending the untransmitted portion to the terminal.

33. The model transmission method of claim 32, wherein before receiving the untransmitted portion sent from the second node, when the processor reads the computer program in the memory, the processor further performs:
sending second request information to the second node, wherein the second request information is used to request the untransmitted portion.

34. The first node of claim 33, wherein the second request information comprises one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

35. The first node of claim 33, wherein requesting the untransmitted portion from the second node comprises:
requesting the second node to transmit the untransmitted portion through a data forwarding procedure.

36. The first node of any of claims 32 to 35, wherein receiving the untransmitted portion sent from the second node comprises:
receiving the untransmitted portion sent from the second node through a data forwarding procedure.

37. The first node of any of claims 29 to 31, wherein transmitting the untransmitted portion of the first model in the new access link comprises:
sending first request information to the terminal, wherein the first request information is used to request the untransmitted portion; and
receiving the untransmitted portion sent from the terminal.

38. The first node of claim 37, wherein the first request information comprises one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
indication information, the indication information being used to indicate that there is a model that has not been transmitted completely; or
the model indication information, the model indication information being used to indicate that the first model has the untransmitted portion.

39. The first node of claim 32 or 33, wherein when the processor reads the computer program in the memory, the processor further performs:
receiving the transmitted portion sent from the second node.

40. The first node of claim 32 or 33, wherein when the processor reads the computer program in the memory, the processor further performs:
sending third request information to the second node, wherein the third request information is used to request the transmitted portion; and
receiving the transmitted portion sent from the second node.

41. The first node of claim 40, wherein the third request information comprises one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

42. The first node of claim 29, wherein obtaining the model transmission associated information comprises:
receiving the model transmission associated information sent from the terminal; or
receiving the model transmission associated information sent from the second node.

43. A terminal, comprising: a memory, a transceiver, and a processor;
wherein the memory is used for storing a computer program; the transceiver is used for receiving and transmitting data under control of the processor; and the processor is used for reading the computer program in the memory and performing the following operations:
transmitting an untransmitted portion of a first model in a new access link, or transmitting a second model in a new access link;
wherein a transmitted portion of the first model has been transmitted in an original access link, the new access link is a link between the terminal and a first node, the original access link is a link between the terminal and a second node, and the second model is a model required by the new access link.

44. The terminal of claim 43, wherein when the processor reads the computer program in the memory, the processor further performs:
sending model transmission associated information to the first node, wherein the model transmission associated information is used to indicate that a first model has an untransmitted portion.

45. The terminal of claim 44, wherein the model transmission associated information comprises one or more of the following:
a unique identifier of the first model;
a segment numbering of the transmitted portion;
a content identifier of the transmitted portion;
a number of bits of the transmitted portion;
a segment numbering of the untransmitted portion;
a content identifier of the untransmitted portion;
a number of bits of the untransmitted portion;
indication information, the indication information being used to indicate that there is a model that has not been transmitted completely; or
model indication information, the model indication information being used to indicate that the first model has the untransmitted portion.

46. The terminal of any of claims 43 to 45, wherein transmitting the untransmitted portion of the first model in the new access link comprises:
receiving the untransmitted portion sent from the first node.

47. The terminal of any of claims 43 to 45, wherein transmitting the untransmitted portion of the first model in the new access link comprises:
receiving first request information sent from the first node, wherein the first request information is used to request the untransmitted portion; and
sending, based on the first request information, the untransmitted portion to the first node.

48. The terminal of claim 47, wherein the first request information comprises one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

49. A second node, comprising: a memory, a transceiver, and a processor;
wherein the memory is used for storing a computer program; the transceiver is used for receiving and transmitting data under control of the processor; and the processor is used for reading the computer program in the memory and performing the following operations:
sending model transmission associated information to a first node, wherein the model transmission associated information is used to indicate that a first model has an untransmitted portion, a transmitted portion of the first model has been transmitted in an original access link, the original access link is a link between a terminal and the second node, and the second node is a node that the terminal is connected to before being connected to the first node.

50. The second node of claim 49, wherein the model transmission associated information comprises one or more of the following:
a unique identifier of the first model;
a segment numbering of the transmitted portion;
a content identifier of the transmitted portion;
a number of bits of the transmitted portion;
a segment numbering of the untransmitted portion;
a content identifier of the untransmitted portion;
a number of bits of the untransmitted portion;
indication information, the indication information being used to indicate that there is a model that has not been transmitted completely; or
model indication information, the model indication information being used to indicate that the first model has the untransmitted portion.

51. The second node of claim 49 or 50, wherein when the processor reads the computer program in the memory, the processor further performs:
sending the untransmitted portion of the first model to the first node.

52. The second node of claim 49 or 50, wherein before sending the untransmitted portion of the first model to the first node, when the processor reads the computer program in the memory, the processor further performs:
receiving second request information sent from the first node, wherein the second request information is used to request the untransmitted portion.

53. The second node of claim 52, wherein the second request information comprises one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

54. The second node of claim 49 or 50, wherein when the processor reads the computer program in the memory, the processor further performs:
sending the transmitted portion to the first node.

55. The second node of claim 49 or 50, wherein when the processor reads the computer program in the memory, the processor further performs:
receiving third request information sent from the first node, wherein the third request information is used to request the transmitted portion; and
sending, based on the third request information, the transmitted portion to the first node.

56. The second node of claim 55, wherein the third request information comprises one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

57. A model transmission apparatus, comprising:
an obtaining module, configured to obtain model transmission associated information, wherein the model transmission associated information is used to indicate that a first model has an untransmitted portion, and a transmitted portion of the first model has been transmitted in an original access link; and
a first transmitting module, configured to transmit an untransmitted portion of the first model in a new access link, or transmit a second model in a new access link;
wherein the new access link is a link between a terminal and the first node, the original access link is a link between the terminal and a second node, and the second model is a model required by the new access link.

58. The model transmission apparatus of claim 57, wherein the obtaining module is further configured to obtain one or more of the following:
a unique identifier of the first model;
a segment numbering of the transmitted portion;
a content identifier of the transmitted portion;
a number of bits of the transmitted portion;
a segment numbering of the untransmitted portion;
a content identifier of the untransmitted portion;
a number of bits of the untransmitted portion;
indication information, the indication information being used to indicate that there is a model that has not been transmitted completely; or
model indication information, the model indication information being used to indicate that the first model has the untransmitted portion.

59. The model transmission apparatus of claim 58, wherein the first transmitting module is further configured to:
determine, based on the model transmission associated information, that the model required by the new access link comprises the first model, and determine to transmit the untransmitted portion of the first model in the new access link; or
determine, based on the model transmission associated information, that the model required by the new access link does not comprise the first model, and determine to transmit the second model in the new access link.

60. The model transmission apparatus of claim 58 or 59, wherein the first transmitting module is further configured to:
send the untransmitted portion saved by the first node to the terminal; or
receive the untransmitted portion sent from the second node, and send the untransmitted portion to the terminal.

61. The model transmission apparatus of claim 60, wherein the model transmission apparatus further comprises:
a first request module, configured to send second request information to the second node before receiving the untransmitted portion sent from the second node, wherein the second request information is used to request the untransmitted portion.

62. The model transmission apparatus of claim 61, wherein the first request module is further configured to request one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

63. The model transmission apparatus of claim 61, wherein the first request module is further configured to:
request the second node to transmit the untransmitted portion through a data forwarding procedure.

64. The model transmission apparatus of any of claims 60 to 63, wherein the first transmitting module is further configured to:
receive the untransmitted portion sent from the second node through a data forwarding procedure.

65. The model transmission apparatus of any of claims 57 to 59, wherein the first transmitting module is further configured to:
send first request information to the terminal, wherein the first request information is used to request the untransmitted portion; and
receive the untransmitted portion sent from the terminal.

66. The model transmission apparatus of claim 65, wherein the first transmitting module is further configured to request one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

67. The model transmission apparatus of claim 65 or 66, wherein the model transmission apparatus further comprises:
a first receiving module, configured to receive the untransmitted portion sent from the second node.

68. The model transmission apparatus of claim 65 or 66, wherein the model transmission apparatus further comprises:
a second sending module, configured to send third request information to the second node, wherein the third request information is used to request the untransmitted portion; and
a second receiving module, configured to receive the untransmitted portion sent from the second node.

69. The model transmission apparatus of claim 68, wherein the second sending module is further configured to send one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

70. The model transmission apparatus of claim 57, wherein the obtaining module is further configured to:
receive the model transmission associated information sent from the terminal; or
receive the model transmission associated information sent from the second node.

71. A model transmission apparatus, comprising:
a second transmitting module, configured to transmit an untransmitted portion of a first model in a new access link, or transmit a second model in a new access link;
wherein a transmitted portion of the first model has been transmitted in an original access link, the new access link is a link between the terminal and a first node, the original access link is a link between the terminal and a second node, and the second model is a model required by the new access link.

72. The model transmission apparatus of claim 71, wherein the model transmission apparatus further comprises:
a third sending module, configured to send model transmission associated information to the first node, wherein the model transmission associated information is used to indicate that a first model has an untransmitted portion.

73. The model transmission apparatus of claim 72, wherein the third sending module is further configured to send one or more of the following:
a unique identifier of the first model;
a segment numbering of the transmitted portion;
a content identifier of the transmitted portion;
a number of bits of the transmitted portion;
a segment numbering of the untransmitted portion;
a content identifier of the untransmitted portion;
a number of bits of the untransmitted portion;
indication information, the indication information being used to indicate that there is a model that has not been transmitted completely; or
model indication information, the model indication information being used to indicate that the first model has the untransmitted portion.

74. The model transmission apparatus of any of claims 71 to 73, wherein the second transmitting module is further configured to:
receive the untransmitted portion sent from the first node.

75. The model transmission apparatus of any of claims 71 to 73, wherein the second transmitting module is further configured to:
receive first request information sent from the first node, wherein the first request information is used to request the untransmitted portion; and
send, based on the first request information, the untransmitted portion to the first node.

76. The model transmission apparatus of claim 75, wherein the second transmitting module is further configured to receive one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

77. A model transmission apparatus, comprising:
a first sending module, configured to send model transmission associated information to a first node, wherein the model transmission associated information is used to indicate that a first model has an untransmitted portion, a transmitted portion of the first model has been transmitted in an original access link, the original access link is a link between a terminal and the second node, and the second node is a node that the terminal is connected to before being connected to the first node.

78. The model transmission apparatus of claim 77, wherein the first sending module is further configured to send one or more of the following:
a unique identifier of the first model;
a segment numbering of the transmitted portion;
a content identifier of the transmitted portion;
a number of bits of the transmitted portion;
a segment numbering of the untransmitted portion;
a content identifier of the untransmitted portion;
a number of bits of the untransmitted portion;
indication information, the indication information being used to indicate that there is a model that has not been transmitted completely; or
model indication information, the model indication information being used to indicate that the first model has the untransmitted portion.

79. The model transmission apparatus of claim 77 or 78, wherein the model transmission apparatus further comprises:
a fourth sending module, configured to send the untransmitted portion of the first model to the first node.

80. The model transmission apparatus of claim 77 or 78, wherein before sending the untransmitted portion of the first model to the first node, the model transmission apparatus further comprises:
a third receiving module, configured to receive second request information sent from the first node, wherein the second request information is used to request the untransmitted portion.

81. The model transmission apparatus of claim 80, wherein the third receiving module is further configured to receive one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

82. The model transmission apparatus of claim 77 or 78, wherein the model transmission apparatus further comprises:
a fifth sending module, configured to send the transmitted portion to the first node.

83. The model transmission apparatus of claim 77 or 78, wherein the model transmission apparatus further comprises:
a fourth receiving module, configured to receive third request information sent from the first node, wherein the third request information is used to request the transmitted portion.
a sixth sending module, configured to send, based on the third request information, the transmitted portion to the first node.

84. The model transmission apparatus of claim 83, wherein the fourth receiving module is further configured to receive one or more of the following:
the model transmission associated information;
the unique identifier of the first model;
the segment numbering of the transmitted portion;
the content identifier of the transmitted portion;
the number of bits of the transmitted portion;
the segment numbering of the untransmitted portion;
the content identifier of the untransmitted portion;
the number of bits of the untransmitted portion;
the indication information, the indication information being used to indicate that there is a model that has not been transmitted completely; or
the model indication information, the model indication information being used to indicate that the first model has the untransmitted portion.

85. A processor-readable storage medium, wherein the processor-readable storage medium stores computer programs that cause a processor to perform the method of any of claims 1 to 14.

86. A processor-readable storage medium, wherein the processor-readable storage medium stores computer programs that cause a processor to perform the method of any of claims 15 to 20.

87. A processor-readable storage medium, wherein the processor-readable storage medium stores computer programs that cause a processor to perform the method of any of claims 21 to 28.
